# EUROPÄISCHE PATENTSCHRIFT

(11) **EP 4 617 809 B1**
(45) Veröffentlichungstag und Bekanntmachung des Hinweises auf die Patenterteilung: **26.08.2026**
(21) Anmeldenummer: 25187812.0
(22) Anmeldetag: 18.05.2021
(51) Int. Cl.: G05D 1/00

(54) **ERFASSUNGSGERÄT FÜR EIN WARENWIRTSCHAFTSSYSTEM**
DETECTION DEVICE FOR A MERCHANDISE MANAGEMENT SYSTEM
APPAREIL DE DÉTECTION POUR UN SYSTÈME DE GESTION DE MARCHANDISES

(43) Veröffentlichungstag der Anmeldung: 17.09.2025
(62) Dokumentnummer(n) der früheren Anmeldung(en) nach Art. 76 EPÜ: 21728477.7 / 4 341 760
(73) Patentinhaber: VusionGroup Deutschland GmbH, 77955 Ettenheim (DE)
(72) Erfinder: Unmüssig, Michael, 77955 Ettenheim (DE); Schwarz, Thomas, 77749 Hohberg (DE)
(74) Vertreter: Schneider, Michael

(56) Entgegenhaltungen:
- WO-A1-2013/071150
- WO-A2-2013/138193
- ALEXANDER H. SLOCUM ET AL: "Magnebots - A Magnetic Wheels Based Overhead Transportation Concept", 5TH IFAC SYMPOSIUM ON MODELLING AND CONTROL IN BIOMEDICAL SYSTEMS 2003, MELBOURNE, AUSTRALIA, 21-23 AUGUST 2003, vol. 35, no. 2, 31 December 2002 (2002-12-31), pages 761 - 766, XP055500584, ISSN: 1474-6670, DOI: 10.1016/S1474-6670(17)34031-4

## Beschreibung

### Technisches Feld

Die Erfindung betrifft ein Erfassungsgerät mit zumindest einem Sensor und einer Bewegungsvorrichtung zum Bewegen des Erfassungsgeräts.

### Hintergrund

Die WO 2013/138193 A2 betrifft ein schienengebundenes, robotergestütztes Inventursystem.

In der WO 2013/071150 A1 werden Ausführungsformen eines robotischen Inventursystems bereitgestellt, die einen mobilen Roboter zur Inventur eines Inventarbereichs aufweisen.

In der Publikation "Magnebots - A Magnetic Wheels Based Overhead Transportation Concept" (Alexander H. Slocum et al., IFAC Proceedings Volumes, Volume 35, Issue 2, December 2002, p. 761-766) werden Fahrzeuge mit magnetischen Rädern beschrieben, die sich auf schienenlosen ferromagnetischen Wänden und Decken bewegen, von integrierten Steuerungen angetrieben und von einem zentralen Computer gesteuert werden.

Aus der EP3020658A1 ist ein Bestandsverwaltungssystem bekannt, das ein automatisiertes geführtes Fahrzeug verwendet, das Artikel in einem Regal scannt, während es sich entlang einer Führungslinie hin und her bewegt. Hierzu weist das Bestandsverwaltungssystem eine Abtasteinheit auf, die eine oder mehrere Antennen umfasst, die vertikal an Stellen angeordnet sind, die den Höhen eines Regalgehäuses entsprechen, um Informationen über Artikel zu erkennen, die in das Regalgehäuse gelegt sind. Die Führungslinien sind entlang eines oder mehrerer Regale stationiert. Weiterhin ist das Fahrzeug dazu konfiguriert, die Abtasteinheit zu unterstützen, die Führungslinien zu erkennen und sich entlang der Führungslinien zu bewegen. Weiterhin ist eine Steuereinheit vorgesehen, die dazu konfiguriert ist, das Fahrzeug so zu steuern, dass sich das Fahrzeug entlang der Führungslinien bewegt.

Das hier präsentierte Bestandsverwaltungssystem hat sich aus mehreren Gründen als nachteilig erwiesen, und zwar wie folgt. Durch die lediglich lineare Führung entlang der Führungslinien ist der Erfassungsbereich der Abtasteinheit stark eingeschränkt. Steht beispielsweise ein großes Produkt im Regal, kann die Abtasteinheit den Bereich hinter dem Produkt nicht erkennen.

Auch Strukturelemente des Regals oder Gegenstände auf einem Regal wie Preisschilder verursachen tote Winkel, sodass die Bereiche innerhalb der toten Winkel nicht erfasst werden können. Es gibt also Stellen bzw. Bereiche im Regal, die systembedingt nicht erfassbar sind.

Weiterhin muss für dieses System ein vordefiniertes Führungsliniennetz entlang der Gänge eines Geschäftslokales geschaffen werden, entlang derer sich das Fahrzeug bewegen kann. Dies schränkt die Gestaltungsfreiheit und Flexibilität hinsichtlich der Regalaufstellung stark ein. Bedingt durch das vordefinierte Führungsliniennetz können auch keine Werbetafeln wie Kundenstopper oder Werbesäulen und auch keine Verkaufsständer, wie beispielsweise Aktionskörbe, vor den Regalen oder in der Nähe der Regale platziert werden, weil diese Plätze ja für die Führungslinien reserviert sind und dort abgestellte Gegenstände dem Fahrzeug im Weg stehen würden.

Dieses Fahrzeug weist zumindest die Höhe eines Regales auf, und ist daher in seinem Erscheinungsbild sehr dominant. Dies kann abschreckend auf Kunden wirken, sodass diese beispielsweise Gänge meiden, in denen sich ein solches Fahrzeug gerade bewegt.

Ein solches Fahrzeug, das durch die Gänge fährt, kann auch für Kunden, insbesondere für Kinder, gefährlich sein, die das herannahende Fahrzeug nicht wahrnehmen und dann mit ihm gegebenenfalls kollidieren.

Ein solches großes Fahrzeug, das für jede abzutastende Regaletage mindestens einen Sensor benötigt, ist relativ teuer in der Produktion und Wartung. Auch ist der Platzbedarf für ein geparktes Fahrzeug nicht zu unterschätzen und wirkt sich daher negativ auf die für die Produktpräsentation zur Verfügung stehende Fläche des Geschäftslokals aus.

Die Erfindung hat sich daher die Aufgabe gestellt, ein verbessertes Erfassungsgerät und eine verbesserte Produktpräsentationsvorrichtung bereitzustellen, bei der die vorangehend erörterten Probleme überwunden sind.

### Zusammenfassung der Erfindung

Diese Aufgabe wird durch ein Erfassungsgerät gemäß Anspruch 1 gelöst. Der Gegenstand der Erfindung ist daher ein Erfassungsgerät, das aufweist: zumindest einen ersten Sensor, der zum Erfassen eines Zustands einer Produktpräsentationsvorrichtung vorgesehen ist, eine Bewegungsvorrichtung, die zum selbstfahrenden Bewegen des Erfassungsgeräts innerhalb der Produktpräsentationsvorrichtung ausgebildet ist, und eine Halte- bzw. Haftvorrichtung, dadurch gekennzeichnet, dass die Halte- bzw. Haftvorrichtung innerhalb der Produktpräsentationsvorrichtung zum selbstständigen Halten bzw. Haften des Erfassungsgeräts am jeweiligen Ort der Bewegung an der Produktpräsentationsvorrichtung ausgebildet ist, wobei die Halte- bzw. Haftvorrichtung durch eine Magnet-Halte- bzw. -Haftvorrichtung realisiert ist.

Weiterhin wird diese Aufgabe durch eine Produktpräsentationsvorrichtung gemäß Anspruch 11 gelöst. Der Gegenstand der Erfindung ist daher eine Produktpräsentationsvorrichtung, insbesondere Regal oder Tisch, die aufweist: zumindest ein erfindungsgemäßes Erfassungsgerät, zumindest eine Vorrichtungszone die zur selbstfahrenden Bewegung des Erfassungsgeräts vorgesehen ist, wobei die Vorrichtungszone hinsichtlich ihrer Oberflächenbeschaffenheit und/oder ihrer Materialbeschaffenheit derart ausgebildet ist, dass das Erfassungsgerät mit Hilfe seiner Halte- bzw. Haftvorrichtung selbständig an ihr hält bzw. haftet.

Mit den erfindungsgemäßen Maßnahmen geht daher der Vorteil einher, dass erstmals eine umfassende Erfassung eines Zustands der Produktpräsentationsvorrichtung mit einem Erfassungsgerät von einer innerhalb der Produktpräsentationsvorrichtung liegenden Position aus ermöglich ist.

Dabei sorgt die Bewegungsvorrichtung des Erfassungsgeräts dafür, dass sich das Erfassungsgerät im Wesentlichen unabhängig oder in anderen Worten selbstfahrend, insbesondere spurungebunden, innerhalb der Produktpräsentationsvorrichtung bewegen kann. Hierbei bedeutet das spurungebundene, selbstfahrende Bewegen des Erfassungsgeräts, dass das Erfassungsgerät keiner Schiene, keinem Seil und keinem Magnetfeld folgt und folglich auch von solchen Maßnahmen nicht geführt wird. Dies erlaubt es dem Erfassungsgerät, seinen Sensor innerhalb der Produktpräsentationsvorrichtung an unterschiedlichsten Positionen und/oder entlang unterschiedlichster Bewegungsbahnen - sogar an zufälligen Positionen und/oder entlang zufälliger Bewegungsbahnen - für die Erfassungszwecke einzusetzen.

Die Erfassung des Zustands erfolgt also nicht wie bei bekannten Systemen von außerhalb der Produktpräsentationsvorrichtung. Auch ist die Erfassungsposition des Sensors nicht auf eine durch mechanische Führungsmaßnahmen vorgegebene Bahn eingeschränkt. Insbesondere wird für die Erzielung der Beweglichkeit des Sensors im Unterscheid zu bekannten Maßnahmen auf dort üblicherweise existierende sperrige und komplizierte (elektro-)mechanische Komponenten, die sich außerhalb der Produktpräsentationsvorrichtung befinden oder innerhalb der Produktpräsentationsvorrichtung platzkonsumierend vorgesehen sind und zur Bewegung eines Sensors dienen, vollständig verzichtet.

Die mechanische Kopplung des Erfassungsgeräts mit der Produktpräsentationsvorrichtung wird im vorliegenden Fall durch die Halte-bzw. Haftvorrichtung bereitgestellt. Da die Halte- bzw. Haftvorrichtung vollständig im Erfassungsgerät integriert ist und sich daher immer mit dem Erfassungsgerät mitbewegt, ist sie innerhalb der Produktpräsentationsvorrichtung zudem ortsungebunden am jeweiligen Ort des Erfassungsgeräts einsetzbar. Dabei wirkt die Halte- bzw. Haftvorrichtung derart, dass sie das Erfassungsgerät entgegen der Wirkung der Schwerkraft an der Produktpräsentationsvorrichtung hält und ein Herunterfallen des Erfassungsgeräts zuverlässig verhindert. Dabei kommen Ausbildungen der Halte- bzw. Haftvorrichtung zum Einsatz, auf die nachfolgend noch im Detail eingegangen ist und die das Erfassungsgerät so stark hin zu der Produktpräsentationsvorrichtung ziehen bzw. eine so starke zumindest temporäre, also lösbare Anhaftung bewirken, sodass das Erfassungsgerät auch unter der Wirkung seines Eigengewichst nicht von der Produktpräsentationsvorrichtung abfällt. Dies erlaubt eine Bewegung des Erfassungsgeräts an schräg von unten nach oben verlaufenden Strukturelementen der Produktpräsentationsvorrichtung, die so steil orientiert sind, dass ohne die Halte- bzw. Haftvorrichtung ein Wegkippen von dem Strukturelement erfolgen würde. Gleiches gilt für die Bewegung an im Wesentlichen sektrechten Strukturelementen, von denen das Erfassungsgerät ohne die Wirkung der Halte-bzw. Haftvorrichtung herunterfallen würde. Mit Hilfe der Halte- bzw. Haftvorrichtung sind jedoch auch Überkopfbewegung ermöglicht, also Bewegungen durchführbar, bei denen das Erfassungsgerät an der Unterseite des Strukturelements frei von jeglicher Unterstützung, also freihängend bewegt wird. Insbesondere die zuletzt genannte Überkopfbewegung hat sich als äußerst vorteilhaft hinsichtlich der wahlfreien Positionierbarkeit des Erfassungsgeräts für die angestrebten Erfassungszwecke ausgewirkt, weil sich diese Überkopfbewegung oberhalb von darunter präsentierten Produkten abspielt und folglich ungehindert von diesen Produkten erfolgen kann. In dieser Position ist das Erfassungsgerät vorwiegend aus einer für Kunden üblichen Perspektive nicht sichtbar, wodurch die eingangs erwähnten für Kunden oft störenden bzw. sogar gefährlichen Aspekte vollständig vermieden sind.

Weitere, besonders vorteilhafte Ausgestaltungen und Weiterbildungen der Erfindung ergeben sich aus den abhängigen Ansprüchen sowie der nachfolgenden Beschreibung.

Die Produktpräsentationsvorrichtung kann beispielsweise ein Regal oder einen Regalbereich sein und eine oder mehrere Regalebenen, die zur Präsentation von Gegenständen, insbesondere von Produkten oder Waren dienen, aufweisen. Es kann sich bei der Produktpräsentationsvorrichtung aber auch um einen Verkaufstisch oder um einen Verkaufsständer usw. handeln.

Der Zustand, der mit Hilfe des Sensors erfassbar ist, kann eine oder mehrere (physikalische) Größen betreffen, wobei der Sensor dementsprechend ausgebildet ist, die entsprechende Erfassung der betreffenden Größe durchzuführen. So können auch zu den unterschiedlichen physikalischen Größen korrespondierende Sensoreinheiten vorgesehen sein.

Der Zustand kann beispielsweise die Temperatur betreffen, die in der Produktpräsentationsvorrichtung herrscht oder die ein Gegenstand in der Produktpräsentationsvorrichtung aufweist. Dementsprechend kann zumindest ein Sensor als Temperatursensor als eine Infrarotkamera oder dergleichen ausgebildet sein.

Der Zustand kann aber auch die Lichtverhältnisse betreffen, die in der Produktpräsentationsvorrichtung herrschen, wobei der Sensor dementsprechend als Lichtsensor oder eine Kamera ausgebildet sein kann.

Der Zustand kann auch das Vorhandensein oder die Konzentration eines speziellen Gases oder eine Mischung von Gasen sein. Solche Gase oder Gasgemische können z.B. bei verderblichen Produkten wie Obst oder Gemüse oder bei Produkten, bei denen ein Austritt von unangenehm riechenden oder gar gefährlichen Gasen, wie beispielsweise bei Lösungsmitteln oder Lacken, möglich ist, auftreten. In diesem Fall kann zumindest ein Sensor als Chemosensor bzw. als Gassensor ausgebildet sein.

Der Zustand kann auch die Belegung einer Produktpräsentationsvorrichtung betreffen. Die Belegung kann beispielsweise das Vorhandensein oder das Fehlen von Gegenständen, die Anzahl von Gegenständen, die Lage oder Orientierung von Gegenständen, die Position von Gegenständen usw. betreffen. Die Belegung kann aber beispielsweise auch Informationen in Form einer dreidimensionalen Karte der Produktpräsentationsvorrichtung und der darin befindlichen Gegenstände betreffen. Ein Sensor zum Erfassen eines Zustands betreffend die Belegung kann unter anderem ein Time-of-Flight-Sensor bzw. ein Laufzeitsensor, eine Kamera oder ein 3D-Kamerasystem, beispielsweise eine Time-of-Flight-Kamera sein.

Das Erfassungsgerät kann über ein sich automatisch ein- bzw.-ausrollendes Kabel mit elektrischer Energie versorgt werden. Bevorzugt weist das Erfassungsgerät jedoch einen elektrischen Energiespeicher auf, der beispielsweise als austauschbare Batterie, als wieder aufladbare Batterie oder auch als Superkondensator ausgebildet sein kann. Auch kann ein Solarpaneel zur autonomen Energieversorgung an dem Erfassungsgerät vorgesehen sein, wobei die damit geerntete bzw. generierte Energie in einem wieder aufladbaren Energiespeicher gespeichert wird. Die Ausbildung mit dem Solarpaneel ist deshalb realisierbar, weil das Erfassungsgerät ja mit seiner Selbstfahrfähigkeit eine Position ansteuern kann, an der ausreichend Lichteinfall für die Aufladung des Energiespeichers vorliegt.

Im Falle eines wieder aufladbaren Energiespeichers kann das Erfassungsgerät sowie die Produktpräsentationsvorrichtung zur kontaktlos (z.B. induktiv) oder kontaktgebunden (z.B. mit Kontakten oder Steckverbindern) Energiespeicheraufladung ausgebildet sein.

Unabhängig davon, ob ein wieder aufladbarer oder ein austauschbarer Energiespeicher vorgesehen ist, hat es sich als vorteilhaft herausgestellt, dass das Erfassungsgerät dazu ausgebildet ist, bei Unterschreitung eines vordefinierten Ladezustands seines elektrischen Energiespeichers mit Hilfe seiner Bewegungsvorrichtung eine Energieversorgungszone innerhalb der Produktpräsentationsvorrichtung anzufahren, um dort mit elektrischer Energie für seinen Betrieb versorgt zu werden.

Um dies problemlos zu ermöglichen, ist die Produktpräsentationsvorrichtung derart ausgebildet, dass die Energieversorgungszone von dem Erfassungsgerät mit Hilfe seiner Bewegungsvorrichtung anfahrbar ist.

Im Falle eines austauschbaren Energiespeichers handelt es sich bei dieser Energieversorgungszone um eine Position bzw. um einen Bereich, in dem ein geschulter Mitarbeiter das Erfassungsgerät möglichst einfach zugänglich entnehmen kann und den bzw. die Energiespeicher tauschen kann. Die Energieversorgungszone kann sich hier beispielsweise am vorderen Rand einer Decke einer Regaletage befinden, sodass ein Mitarbeiter das Erfassungsgerät leicht auffinden kann, ggf. von der Produktpräsentationsvorrichtung entnehmen kann, und den bzw. die Energiespeicher tauschen kann, und ggf. das Erfassungsgerät wieder an der Energieversorgungzone absetzen kann. Die Energieversorgungszone kann sich aber auch in einem Bereich der Produktpräsentationsvorrichtung befinden, der nur für Mitarbeitern zugänglich ist, beispielweise in einer (ggf. sich automatisch verschließenden) Box oder Servicestation.

Im Falle einer aufladbaren Energiespeichers ist es vorteilhaft, wenn die Energieversorgungszone eine Ladestation aufweist bzw. benachbart dazu lokalisiert ist, wobei mit Hilfe der Ladestation, bevorzugt mittels kontaktloser Energieübertragung, das Erfassungsgerät mit elektrischer Energie versorgbar ist. Das Erfassungsgerät muss sich also nur selbständig in der Energieversorgungszone positionieren, um dort mit Energie versorgt zu werden. Die Ladestation ihrerseits kann mit einer austauschbaren Batterie, bevorzugt einer weideraufladbaren Batterie, ausgerüstete sein, die eine derart hohe Ladekapazität aufweist, dass ein oftmaliges Laden des Energiespeichers des Erfassungsgeräts ermöglicht ist.

Im Falle eines mit einem Solarpaneel ausgerüsteten Erfassungsgeräts kann es sich bei der Energieversorgungszone um jenen Bereich der Produktpräsentationsvorrichtung handeln, bei dem einfach nur ausrechend Lichteinfall für das Aufladen des Energiespeichers vorliegt. Diese Energieversorgungszone kann z.B. auch wahlfrei in Abhängigkeit von den tatsächlich vorliegenden Lichtverhältnissen vom Erfassungsgerät selbst währen seiner Fahrt gewählt werden und kann sich daher je nach aktueller Routenführung ändern bzw. durch das Erfassungsgerät selbst definiert werden. Um auch im Falle einer verdeckten bzw. versteckten Positionierung des Erfassungsgeräts einen guten und ausrechenden Lichteinfall zur Wiederaufladung des Energiespeichers mittels Solarpaneel sicherzustellen, kann die Produktpräsentationsvorrichtung auch mit einem Spiegel oder einer verspiegelten, ggf. auch Licht fokussierenden, Zone ausgestattet sein, die das aus der Umgebung einfallende Licht in die Produktpräsentationsvorrichtung einleitet.

Die Bewegungsvorrichtung weist mindestens ein Antriebselement wie beispielsweise einen Elektromotor, einen Linearmotor oder einen Linearaktuator zum Bereitstellen einer Kraft bzw. einer Bewegung und mindestens ein Übertragungselement zum Übertragen der Kraft bzw. der Bewegung auf die Umgebung auf.

Die Bewegungsvorrichtung kann beinähnliche (mechanisch und/oder elektromechanische) Strukturen aufweisen, mit denen die bewegungsvorrichtungsspezifischen Bewegungsabläufe und die Kraft zum Erzeugen der gewünschten Bewegung auf die Umgebung, also auf die Produktpräsentationsvorrichtung übertragen wird. Diese beinähnlichen Strukturen können auch Aktuatoren aufweisen, die diese Kraft verursachen. Sie können aber auch von einem nicht in den beinähnlichen Strukturen befindlichen Aktuator, beispielsweise von einem Elektromotor angetrieben werden.

Gemäß einer bevorzugten Ausbildungsform weist die Bewegungsvorrichtung des Erfassungsgeräts zumindest ein Element der nachfolgend angeführten auf, nämlich ein Rad, eine Rolle bzw. eine Walze, eine Kette, einen Riemen und/oder eine Kugel. All diese Elemente können mit einem Elektromotor angetrieben werden und damit das Erfassungsgerät relativ zu seiner Umgebung, mit der diese Elemente zusammenwirken, bewegen.

Die Halte- bzw. Haftvorrichtung sorgt für eine, insbesondere reversible, Verbindung des Erfassungsgeräts mit einem entsprechenden Gegenstück, insbesondere mit zumindest einer Vorrichtungszone der Produktpräsentationsvorrichtung. Die Halte- bzw. Haftvorrichtung, sowie die Vorrichtungszone können auf mehrere Arten ausgebildet und aufeinander abgestimmt sein, um das Halten bzw. Haften des Erfassungsgeräts an der Vorrichtungszone zu gewährleisten bzw. sicherzustellen.

So kann es sich bei der Halte- bzw. Haftvorrichtung um eine Unterdruck-Halte- bzw. Unterdruck-Haftvorrichtung handeln. Hierfür kann beispielsweise ein Ventilator oder eine Pumpe vorgesehen sein, womit die Luft aus jenem Bereich, der sich bei bestimmungsgemäßer Verwendung zwischen Erfassungsgerät und Vorrichtungszone befindet, abgesaugt wird, sodass das Erfassungsgerät zufolge des Umgebungsdrucks, bzw. des geringeren Drucks (Unterdruck) in jenem Bereich, in dem die Luftabsaugung wirkt, an der Vorrichtungszone (auch gegen die Schwerkraft) hält bzw. haftet. Die Unterdruck-Halte- bzw. Unterdruck-Haftvorrichtung ist vollständig in der Bewegungsvorrichtung integriert. Weist die Bewegungsvorrichtung beispielsweise zumindest eine Rolle bzw. Walze auf, kann diese radial Bohrungen aufweisen, die mit einer axialen Bohrung verbunden sind, sodass die Luft direkt an der Auflagestelle der Walze, an der die Walze auf der Vorrichtungszone anliegt, durch diese Bohrungen abgesaugt werden kann. Die restliche Walze kann hierfür mit einer Abdeckung ummantelt sein oder die dort befindlichen Bohrungen mit Ventilen verschlossen sein, sodass eine ausreichende Druckdifferenz an der gewünschten Auflagestelle bereitstellbar ist. Die Bewegungsvorrichtung kann auch mit Saugnäpfen ausgestattet sein. Weist die Bewegungsvorrichtung beispielsweise mit Saugnäpfen ausgestattete Ketten oder Riemen auf, können einzelne oder auch mehrere Saugnäpfe gleichzeitig den haftenden bzw. haltenden Kontakt zwischen dem Erfassungsgerät und der Vorrichtungszone herstellen. Im Zusammenhang mit den erörterten Ausbildungsformen hat es sich als vorteilhaft erwiesen, dass die mit den Kontakt-Elementen der Halte- bzw. Haftvorrichtung zusammenwirkende Vorrichtungszone möglichst glatt ist, also mit geringer Rauheit, und möglichst flach bzw. mit großen Radien ausgebildet ist, damit die Kontakt-Elemente der Unterdruck-Halte- bzw. Unterdruck-Haftvorrichtung dort dicht anliegen können. Die haltenden bzw. haftenden Kontakt-Elemente der Unterdruck-Halte- bzw. Unterdruck-Haftvorrichtung können im Verlauf der Bewegung zielgerichtet bzw. sequenziell aktiviert und deaktiviert werden, um immer zum richtigen Zeitpunkt bzw. an der jeweils vorliegenden Auflagestelle ihre haltende bzw. haftende Wirkung zu entfalten.

Bei der Halte- bzw. Haftvorrichtung kann es sich auch um eine wieder lösbare Klebe-Halte- bzw. -Haftvorrichtung handeln. Hierfür können Elemente der Bewegungsvorrichtung, beispielsweise Räder oder Riemen, an ihrer Oberfläche mit einer speziellen Beschichtung, beispielsweise einem Haftklebstoff bzw. einem klebrigen Elastomer, versehen sein, wobei sich die Beschichtung im Bewegungsablauf an der jeweiligen Auflagestelle mit der Vorrichtungszone durch Adhäsion und Kohäsion temporär verbindet. Eine äquivalente Ausbildung kann auch auf dem Prinzip eines Klettverschlusses basieren. Auch diese Halte- bzw. Haftvorrichtungen etabliert ihre haltende bzw. haftende Wirkung an der sich im Bewegungsablauf jeweils etablierenden Auflagestelle.

Auch kann die Halte- bzw. Haftvorrichtung losgelöst von der Bewegungsvorrichtung ausgebildet sein und sequentiell steuerbar an sich im Verlauf der Bewegung ergebenden unterschiedlichen Auflagestellen ihre Wirkung entfalten. Dies kann z.B. durch sequenziell einsatzbare Streben, an deren Enden sich die Kontakt-Elemente der Halte- bzw. Haftvorrichtung befinden, realisiert sein, die im Bewegungsablauf wechselweise, jedoch zeitlich geringfügig überlappend, zur Anwendung kommen.

Gemäß einer bevorzugten Ausbildungsform ist die Halte- bzw. Haftvorrichtung jedoch durch eine Magnet-Halte- bzw. Magnet-Haftvorrichtung realisiert. Die Vorrichtungszone besteht hierfür im Wesentlichen aus einem Stoff bzw. Material mit ferromagnetischen Eigenschaften, beispielsweise aus Eisen oder einem ferritischen Stahl oder einem anderen Material mit ähnlichen Eigenschaften. Die Halte- bzw. Haftwirkung mit einer solchen Vorrichtungszone wird durch eine Magnetvorrichtung bzw. Magnetanordnung in dem Erfassungsgerät hergestellt. Diese Magnetvorrichtung kann mit einem Magneten oder mit mehreren Magneten, die im Abstand zueinander angeordnet sind, gebildet sein. Bei dem/den hierfür verwendeten Magneten kann es sich um Elektromagneten oder bevorzugt um Permanentmagneten handeln. Auch hier kann die Magnet- Halte- bzw. Haftvorrichtung eine von der Bewegungsvorrichtung unabhängige Einheit bilden oder in der Bewegungsvorrichtung integriert sein. So kann beispielsweise die Bewegungsvorrichtung des Erfassungsgeräts vier Räder aufweisen und die Magnet- Halte- bzw. Haftvorrichtung kann einen Permanentmagneten aufweisen, der in der Mitte der vier Räder, also beispielsweise in zentraler Position des Erfassungsgeräts, insbesondere äquidistant beabstandet zu den vier Rädern, platziert ist.

Die Verwendung eines oder mehrere Permanentmagnete hat sich deshalb als äußerst vorteilhaft erwiesen, weil die Halte- bzw. Haft-Wirkung ohne die Nutzung der im Energiespeicher gespeicherten elektrischen Energie erzielbar ist. Die im Energiespeicher gespeicherte elektrische Energie steht somit unbeeinflusst durch die Halte- bzw. Haft-Wirkung für die anderen elektronischen Funktionen des Erfassungsgeräts zur Verfügung.

Der Permanentmagnet kann Flächenbündig mit dem Gehäuse des Erfassungsgeräts oder auch innerhalb des Gehäuses montiert sein. Bevorzugt ragt der Permanentmagnet in Richtung der Vorrichtungszone, auf der sich die Räder bewegen, aus dem Erfassungsgerät heraus. Damit lässt sich der ideale Abstand zwischen Magneten und Vorrichtungszone einstellen, damit sich eine optimale Magnet-Halte- bzw. Haftwirkung einstellt. Gleiches lässt sich durch eine Justierung des Abstands zwischen dem Gehäuse des Erfassungsgeräts und der Vorrichtungszone bewirken, wenn der Permanentmagnet - wie vorangehend erörtert - nicht über das Gehäuse hinweg aus dem Erfassungsgerät herausragt. Hierbei ist grundsätzlich festzustellen, dass zwischen dem Permanentmagneten und der Vorrichtungszone ein Luftspalt bestehen bleibt, damit die Kraft, welche das Erfassungsgerät magnetisch gegen die Vorrichtungszone zieht, nicht zu stark wird und die Fähigkeit der Bewegungsvorrichtung übersteigt. Insbesondere ist ein vollständig an der Vorrichtungszone anliegender Permanentmagnet zu vermeiden, weil in diesem Fall bei der Bewegung auch noch Arbeit gegen die Reibung zu verrichten wäre. In Abhängigkeit von der magnetischen Anziehungskraft, die mit Hilfe des tatsächlich zum Einsatz kommenden Magneten möglich ist, ist also jene Luftspaltweite zu wählen, die einerseits ein problemloses Bewegen des Erfassungsgeräts mit Hilfe seiner Bewegungsvorrichtung und unter optimaler Nutzung der im Energiespeicher gespeicherten elektrischen Energie ermöglicht und gleichzeitig ein zuverlässiges Halten bzw. Haften des Erfassungsgeräts an der Vorrichtungszone sicherstellt.

Die Magnet- Halte- bzw. Haftvorrichtung kann aber auch in der Bewegungsvorrichtung integriert sein, wobei beispielsweise beinartige Strukturen, Räder, Rollen bzw. Walzen, Kugeln, Ketten oder Riemen geeignete Magnete beinhalten oder aus Magneten bzw. magnetischen Materialien gefertigt sind.

Bei bestimmungsgemäßer Verwendung des Erfassungsgeräts auf der Vorrichtungszone hält der Permanentmagnet das Erfassungsgerät stabil an der Vorrichtungszone, während die Bewegungsvorrichtung mit den Rädern das Erfassungsgerät auf der Vorrichtungszone bewegen kann.

Durch Abstimmung der Halte- bzw. Haftvorrichtung mit der Bewegungsvorrichtung lassen sich Ausbildungsformen mit bestimmten besonders vorteilhaften Eigenschaften erzielen. Elemente, die eine große Auflagefläche aufweisen, wie beispielsweise Rollen, Ketten und Riemen können, insbesondere bei in der Bewegungsvorrichtung integrierter Halte-bzw. Haftvorrichtung starke Kontaktkräfte hervorrufen, was eine hohe Beladung bzw. ein hohes Eigengewicht des Erfassungsgeräts zulässt. Kugeln erlauben ein agiles Bewegen des Erfassungsgeräts. Räder bieten einen guten Kontakt bei gleichzeitig geringem Platzbedarf und etablierten Antriebssystemen.

Wie erwähnt können grundsätzlich verschiedene Aktuatoren verwendet werden, um die Elemente für die Kraftübertragen zur Bewegung, wie beispielsweise die Räder oder Riemen anzutreiben. Es ist vorteilhaft, wenn die Bewegungsvorrichtung zumindest einen Elektromotor, bevorzugt jedoch zwei Elektromotoren aufweist. So kann die Bewegungsvorrichtung bei Verwendung eines Elektromotors weiterhin eine Lenkvorrichtung (ähnlich wie bei einem Auto) aufweisen, um mindestens zwei der Elemente, die an der Kraftübertragung beteiligt sind, beispielsweise mindestens zwei Räder gemeinsam (gleichsinnig) zu verschwenken, sodass ein Kurvenfahren möglich ist. Bevorzugt weist die Bewegungsvorrichtung jedoch zwei Elektromotoren auf, von denen jeder dazu ausgebildet ist, mindestens ein zur Kraftübertragung ausgebildetes Element (wie beispielsweise ein Rad) anzusteuern bzw. zu bewegen. So lässt sich durch Änderung der Drehzahl der beiden Elektromotoren relativ zueinander oder auch gegensinniger Drehrichtung eine Richtungsänderung der Bewegung des Erfassungsgeräts erzielen. Es handelt sich also um eine Panzerlenkung, die auch ein Wenden am Stand erlaubt.

Um eine Navigation des Erfassungsgeräts in der Produktpräsentationsvorrichtung zu ermöglichen, kann der vom ersten Sensor erfasste Zustand bzw. können die vom ersten Sensor erfassten Daten verwendet werden. Alternativ oder ergänzend können jedoch auch Daten weiterer Sensoren herangezogen werden.

Es hat sich daher als vorteilhaft erwiesen, wenn die Bewegungsvorrichtung des Erfassungsgeräts zumindest einen zweiten Sensor aufweist, der zur Erfassung der Umgebung des Erfassungsgeräts oder der Position des Erfassungsgeräts für die Zwecke der Bewegung des Erfassungsgeräts vorgesehen ist.

Bei diesem zweiten Sensor kann es sich um einen eigenständigen Sensor handeln, der ortsunabhängig vom ersten Sensor platziert ist. Der erste Sensor und der zweite Sensor können aber auch zusammen eine Sensoreinheit bilden. Auch kann der erste Sensor dazu ausgebildet sein, die Aufgabe des zweiten Sensors temporär anstatt der Erfassung des Zustands der Produktpräsentationsvorrichtung oder neben der Erfassung des Zustands der Produktpräsentationsvorrichtung zu übernehmen.

Bei dem zweiten Sensor kann es sich um den gleiche Sensortyp wie bei dem ersten Sensor handeln. So können beispielsweise beide als Kameras ausgebildet sein. Es kann sich aber auch um einen anderen Sensortyp handeln. So kann der erste Sensor beispielsweise als Kamerasystem ausgebildet sein, während der zweite Sensor dazu ausgebildet ist, eine Laufzeitmessung durchzuführen, um die für die Bewegung nutzbare Umgebung zu erfassen. Auch ist eine umgekehrte Konfiguration möglich.

Zusammengefasst kann der zweite Sensor beispielsweise als Kamera, als 3D-Kamerasystem oder als Sensor zum Durchführen einer lokalen Laufzeitmessung ausgebildet sein.

Der zweite Sensor kann auch Teile eines größeren Systems sein, wie z.B. eines Positionierung-Systems, insbesondere eines Indoor-Positionierung-Systems (abgekürzt IPS). So kann es sich bei dem IPS beispielsweise um ein Wi-Fi-Positionierung-System (abgekürzt WPS) handeln und (einer) der zweite Sensor kann ein Wi-Fi-Modul aufweisen oder als solches realisiert sein, sodass mittels WPS die Position des Erfassungsgeräts im Geschäftslokal, in dem die Produktpräsentationsvorrichtung positioniert ist, feststellbar ist.

Weiterhin können auf der Produktpräsentationsvorrichtung RFID- oder NFC-Module oder Gegenstände wie beispielsweise Preisanzeigeschilder, die ein RFID- oder NFC-Modul aufweisen vorgesehen sein. Um diese Module zur Navigation oder Positionsbestimmung zu nutzen, hat es sich als vorteilhaft erwiesen, dass der zweite Sensor eine RFID- oder NFC-Einheit aufweist. Damit lässt sich die Position des Erfassungsgerätes innerhalb der Produktpräsentationsvorrichtung anhand der dort installierten (und ggf. auch positionsbekannten) RFID- oder NFC-Module in deren unmittelbarer Nähe bestimmen. Umgekehrt kann durch diese Maßnahmenkombination auch die Position von positionsunbekannten RFID- oder NFC-Module in der Produktpräsentationsvorrichtung währen der Bewegung des Erfassungsgeräts ermittelt werden, sobald sich das Erfassungsgerät in unmittelbarer Nähe zu einem in der Produktpräsentationsvorrichtung positionierten RFID- oder NFC-Modul befindet und die Position des Erfassungsgeräts bekannt ist, weil sich diese Position z.B. aus dem zurückgelegten Weg (z.B. ähnlich einer Koppelnavigation) ergibt.

Es können auch mehrere zweite Sensoren vorgesehen sein. So kann einer der zweiten Sensoren dazu ausgebildet sein, eine Indoor-Ortung vorzunehmen, insbesondere um die Position innerhalb des Geschäftslokals zu ermitteln, während ein weiterer zweiter Sensor als Kamera ausgebildet sein kann, um die unmittelbare Umgebung des Erfassungsgeräts auf Befahrbarkeit zu überprüfen, also festzustellen ob Gegenstände im Weg stehen oder ob das Ende der Vorrichtungszone, also das Ende eines Fahrbereiches erreicht ist und in Folge eine Richtungsänderung nötig ist.

Das Erfassungsgerät kann dazu ausgebildet sein sich vollständig autonom durch die Präsentationsvorrichtung oder durch mehrere Präsentationsvorrichtungen zu bewegen und die erfassten Zustände in Form von Erfassungsdaten zu speichern. Diese können beispielsweise von einem Mitarbeiter in regelmäßigen Abständen ausgelesen werden, um beispielsweise nach Ladenschluss auf Basis der erfassten Zustände festzustellen, wo Gegenstände nachzufüllen sind oder wo andere Maßnahmen notwendig sind. Um rasch auf aktuelle Zustände (ggf. auch Zustandsänderungen) reagieren zu können, aber auch um die Erfassungsdaten extern vom Erfassungsgerät weiter verarbeiten zu können, ist es wünschenswert, diese Erfassungsdaten automatisiert bereitstellen zu können.

Es hat sich daher als vorteilhaft erwiesen, dass das Erfassungsgerät ein erstes Funkmodul aufweist, das zum funkbasierten Kommunizieren von Daten ausgebildet ist, wobei die Daten den Sensor und/oder die Bewegungsvorrichtung betreffen. So können die Daten, die den Sensor betreffen, also insbesondere die Erfassungsdaten, aber auch gegebenenfalls Daten betreffend den Zustand des Sensors oder des Erfassungsgeräts, wie beispielsweise der Akkustand, direkt an einen externen Empfänger übermittelt oder ins Internet an einen cloudbasierten Dienst hochgeladen werden.

Dafür kann zumindest ein zweites (externes) Funkmodul, das zum funkbasierten Kommunizieren von Daten mit dem ersten Funkmodul, das in dem Erfassungsgerät integriert ist, ausgebildet ist, vorgesehen sein. Bei dem zweiten Funkmodul kann es sich z.B. um einen Access Point einer Wi-Fi-Infrastruktur in einem Geschäftslokal handeln. Die Daten werden von dort zu einer externen Verarbeitungseinheit, wie z.B. einem Server oder an den cloudbasierten Dienst, übermittelt wo die Daten mit entsprechender Rechenleistung und Speicherverfügbarkeit weiterverarbeitet werden können. Diese Maßnahme erlaubt es, die Daten außerhalb des Erfassungsgeräts mit wesentlich höherer Rechenleistung weiter zu verarbeiten, sodass das Verkaufspersonal an einer zentralen Stelle (z.B. im Back-Office des Geschäfts) Einblick auf die Zustände der Produktpräsentationsvorrichtungen wie auch die Zustände des Erfassungsgeräts nehmen kann.

Dies reduziert die Daten, die unmittelbar vom Erfassungsgerät verarbeitet werden müssen, wodurch die Rechenleistung wie auch der Speicherbedarf entsprechend kostengünstig ausgelegt werden kann. Das Erfassungsgerät kann also entsprechend kompakter ausgebildet sein und damit auch kostengünstiger hergestellt werden.

Eine Datenverarbeitung (insbesondere einer Vorverarbeitung) im Erfassungsgerät selbst bringt die Vorteile mit sich, dass das Erfassungsgerät, auch bei Abbrechen des Funkkontakts mit seiner Infrastruktur, autonom und dynamisch seine Bewegung bzw. Navigation in der Produktpräsentationsvorrichtung fortsetzen kann, die Erfassung der Zustände weiterführen kann, die dabei generierten Erfassungsdaten in komprimierter Form speichern kann und zu einem späteren Zeitpunkt zur weitere Auswertung abgeben kann.

Daher weist das Erfassungsgerät gemäß einer bevorzugten Ausbildungsform eine Steuereinheit auf, die dazu ausgebildet ist, die Bewegungsvorrichtung derart anzusteuern, dass das Erfassungsgerät autonom innerhalb der Produktpräsentationsvorrichtung manövrierbar ist. Die interne Steuereinheit kann dafür ausgebildet sein, das Erfassungsgerät autonom von einer Zielposition zur nächsten zu manövrieren, um eine möglichst vollständige Erfassung des Zustands der Produktpräsentationsvorrichtung zu ermöglichen. Auch kann vorgesehen sein, dass des Erfassungsgeräts mit Hilfe der externen Verarbeitungseinheit gezielt fernsteuerbar ist.

Wie bereits erwähnt hat es sich als vorteilhaft herausgestellt, dass der mindestens eine erste Sensor zur Generierung von Erfassungsdaten ausgebildet ist, wobei die Erfassungsdaten den erfassten Zustand der Produktpräsentationsvorrichtung repräsentieren, und dass die Steuereinheit dazu ausgebildet ist, die Erfassungsdaten vor zu verarbeiten.

Bei dieser Vorverarbeitung der Erfassungsdaten können die Daten interpretiert und das Datenvolumen reduziert werden. Es kann die Steuereinheit dazu ausgebildet sein, Daten mittels künstlicher Intelligenz (KI), Mustererkennung, bzw. Machine-Learning zu verarbeiten. So können die Erfassungsdaten beispielsweise von umfangreichen Roh-Bilddaten auf die Information, die Angibt, wie viele Gegenstände sich in der Produktpräsentationsvorrichtung oder in einem Abschnitt der Produktpräsentationsvorrichtung befinden, reduziert werden. Auch können die Erfassungsdaten lediglich in ihrer Größe optimiert werden, also komprimiert werden.

Auch kann die Steuereinheit dazu ausgebildet sein, die Daten nur dann über das erste Funkmodul zu übermitteln, wenn bei der Erfassung des Zustands eine kritische Größe, die z.B. vordefiniert sein kann oder sich durch künstliche Lernprozesse ergibt, unter oder überschritten wird. So kann die Steuereinheit dazu ausgebildet sein, bei Unterschreitung einer Mindestmenge der Belegung der Produktpräsentationsvorrichtung mit Produkten oder beim Überschreiten einer bestimmten Temperatur in einem bestimmten Bereich in der Produktpräsentationsvorrichtung, Erfassungsdaten zu übermitteln, die neben der Angabe des Eintretens dieser kritischen Größe ggf. auch einen alarmierenden Datenanteil aufweisen.

Auch kann die Steuereinheit dazu ausgebildet sein, in bestimmten zeitlichen Abständen oder nach erfolgreicher Erfassung bestimmter örtlicher Bereiche Erfassungsdaten zu übermitteln.

Weiterhin kann die Steuereinheit dazu ausgebildet sein, die Aspekte der kritischen Größe, die zeitlichen Abstände oder auch die örtlichen Bereiche zu kombinieren, um einen Auslöser für die Übertragung der Erfassungsdaten zu generieren.

Zusammenfassend kann das interne erste Funkmodul also dazu ausgebildet sein, die Erfassungsdaten der Sensoren als Rohdaten oder vorverarbeitete Daten oder auch andere Daten, die das Erfassungsgerät betreffen, beispielsweise über ein Wireless Local Area Network (WLAN / WIFI) oder über eine Mesh-Netzwerk-Konfiguration abzugeben. Auch können andere (de-facto standardisierte) Kommunikationsprotokolle wie z.B. ZigBee oder BlueTooth zur Anwendung kommen. Auch kann vorgesehen sein, dass die Sensoren mit einem 4G- oder 5G-Funkmodul ausgerüstet sind, um ihren Funkverkehr über ein (öffentliches) Mobilfunknetzwerk abzuwickeln und als IoT-Geräte zu fungieren (IoT steht hier für Internet-of-Things). Auch kann ein separates 4G- oder 5G-fähiges Funkgerät als Access-Point für die Sensoren dienen, die mit diesem Access-Point via Funk oder kabelgebunden in Verbindung stehen. Natürlich können auch andere Geräte, die zur Infrastruktur eines Warenwirtschafssystems bzw. eines Regal-Logistiksystems gehören als IoT-Hub für die Sensoren dienen. Hierfür können z.B. Kameras zum Einsatz kommen, mit deren Hilfe Produktpräsentationsvorrichtungen abgefilmt werden. Diese Kameras weisen die 4G- bzw. 5G-Mobilfunkfähigkeit auf und kommunizieren mit den Sensoren bzw. dem Erfassungsgerät gemäß einem anderen Kommunikationsprotokoll funkbasiert.

Für die funkbasierte Anbindung der Sensoren bzw. des Erfassungsgeräts kann natürlich auch ein proprietäres Kommunikationsverfahren bzw. Kommunikationsprotokoll zur Anwendung kommen, wie dies z.B. aus der PCT/EP2014/053376 bekannt ist, wobei deren Offenbarung in Bezug auf das dort erörterte Zeitschlitzkommunikationsverfahren durch Bezugnahme aufgenommen ist. Im Unterschied zu dem in der PCT/EP2014/053376 offenbarten System wird hier jedoch dieses Zeitschlitzkommunikationsverfahren zur Kommunikation zwischen einem Sensor-Accesspoint und einer Gruppe diesem Sensor-Accesspoint zugeordneten Sensoren bzw. Erfassungsgeräten genutzt. Dieses proprietäre Kommunikationsverfahren erlaubte einen extrem energiesparenden Betrieb der batteriebetriebenen Sensoren bzw. Erfassungsgeräte, allerdings zu Lasten der Verfügbarkeit der Sensoren. Vor diesem Hintergrund kann das erste Funkmodul nur sehr selten von seinem Schlafmodus in seinen Aktivmodus wechseln, um funktechnisch verfügbar zu sein. Auch in diesem Schlafmodus kann das Erfassungsgerät eine oder mehrere Erfassungen durchführen und sich bewegen. Die dabei generierten Erfassungsdaten können dann im Laufe der Zeit unter Verwendung des proprietären Kommunikationsverfahrens abgegeben werden, sobald sich das erste Funkmodul in seinem Aktivmodus befindet.

Um eine höhere Verfügbarkeit der Erfassungsdaten sicherzustellen, kann das erste Funkmodul mit einem zusätzlichen Aufweckempfänger ausgerüstet sein, sodass es durch ein von einem Aufwecksender abgegebenes (ggf. auch adressiertes) Aufwecksignal aktivierbar ist, um dann im Aktivmodus Erfassungsdaten abzugeben und dann wieder in den energiesparenden Schlafmodus einzutreten, bis dass es wieder gemäß dem Zeitraster des proprietären Kommunikationsverfahrens funktechnisch verfügbar sein muss. Das Aufwecksignal hat hierbei die Wirkung eines externen Trigger-Signals, um das jeweilige erste Funkmodul in den Aktivmodus zu versetzten.

Gemäß einer bevorzugten Ausbildungsform weist das Erfassungsgerät eine erste Erkennungsstufe auf, die dazu ausgebildet ist, einen Verlust des selbständigen Haltens bzw. Haftens des Erfassungsgeräts an der Produktpräsentationsvorrichtung zu erkennen.

Hierfür können beispielsweise die Daten des zumindest einen ersten Sensors oder des zumindest einen zweiten Sensors ausgewertet werden. Wird hier beispielsweise ein schwarzes Bild oder ein sehr geringer Abstand zwischen dem Sensor und der zu erfassenden Fläche bzw. allgemein einem Gegenstand festgestellt, kann dies ein Hinweis darauf sein, dass ein Verlust des selbständigen Haltens bzw. Haftens des Erfassungsgeräts stattgefunden hat. Auch kann das Drehmoment, das das Antriebselement der Bewegungsvorrichtung überwinden muss, erfasst werden. Weist die Bewegungsvorrichtung beispielsweise einen Elektromotor und Räder auf und befinden sich die Räder nach Verlust des selbständigen Haltens bzw. Haftens des Erfassungsgeräts in der Luft ohne Kontakt zur Produktpräsentationsvorrichtung, lässt sich dies durch Überwachung des Verhaltens der Räder oder des antreibenden Elektromotors erkennen. Es können aber auch weitere Sensoren vorgesehen sein, um einen Verlust des selbständigen Haltens bzw. Haftens des Erfassungsgeräts festzustellen. Hierfür können beispielsweise Kontaktsensoren an den Rädern oder an den erörterten alternativen Elementen zur Fortbewegung vorgesehen sein. Bei Kontaktverlust zwischen Rädern und Vorrichtungszone erzeugen solche Kontakte ein Signal, das von der Erkennungsstufe verarbeitet werden kann. Wird eine Magnet- Halte- bzw. Haftvorrichtung verwendet, kann auch das Verhalten des magnetischen Felds, beispielsweise mittels Hall-Sensor, erfasst werden. Kommt es zu einem Verlust des selbständigen Haltens bzw. Haftens des Erfassungsgeräts ändert sich das magnetische Feld dadurch, dass sich der Magnet nicht mehr in der Nähe der Vorrichtungszone befindet, was ein Signal liefert, das von der Erkennungsstufe verarbeitbar ist. Die Erkennungsstufe kann eine selbständige Einheit darstellen oder als Teil der Steuereinheit ausgebildet sein. Sie kann hardware- und/oder software-basiert realisiert sein.

Der Verlust des selbständigen Haltens bzw. Haftens des Erfassungsgeräts kann mehrere Ursachen haben. Dies kann beispielsweise passieren, wenn das Erfassungsgerät auf Grund einer Erschütterung, beispielsweise weil jemand mit einem Einkaufswagen gegen die Produktpräsentationsvorrichtung fährt, oder bei einem Diebstahlversuch des Erfassungsgeräts, wenn es also von der Vorrichtungszone vorsätzlich entfernt wird, auftreten. In jedem Fall ist es von Vorteil, wenn das Verkaufspersonal über die Tatsache des Haftungsverlust informiert wird.

Daher ist das Erfassungsgerät bevorzugt dazu ausgebildet, bei Feststellung des Verlusts des selbständigen Haltens bzw. Haftens, insbesondere auch über die momentane Position des Erfassungsgeräts, darüber automatisch zu informieren. In diesem Kontext kann es vorteilhaft sein, wenn das Erfassungsgerät dazu ausgebildet ist, bei Verlust des selbständigen Haltens bzw. Haftens zumindest eine der folgenden Aktionen durchzuführen:
- ein akustisches Signal über ein Akustik-Signalmodul des Erfassungsgeräts abzugeben,
- ein optisches Signal über ein Optik-Signalmodul des Erfassungsgeräts abzugeben,
- Erfassungsdaten des zumindest ersten Sensors und/oder des zumindest einen zweiten Sensors unmittelbar bei Auftreten des Halt- bzw. Haftverlusts zu übermitteln,
- Hinweisdaten zu übermitteln, die eine Unstimmigkeit betreffend das Haft- bzw. Halteverhalten beschreiben oder anzeigen,
- die Bewegungsvorrichtung derart anzusteuern, dass beispielsweise eine Schaukelbewegung des Erfassungsgerätes verursacht ist oder die Bewegungsvorrichtung ein die Aufmerksamkeit erregendes akustisches Signal verursacht,
- in zeitlichen Abständen eine Erfassung mit dem ersten Sensor durchzuführen und die Erfassungsdaten zu übermitteln, um einen Rückschluss auf die Situation bzw. die Position des Erfassungsgerätes zu ermöglichen,
- das Einnehmen eines energiesparenden Zustandes der Erfassungsgeräts zu veranlassen, wenn das Erfassungsgerät nicht innerhalb einer bestimmten Zeit auf die Produktpräsentationsvorrichtung zurückgesetzt wird.

Die Erkennung eines Verlusts des selbständigen Haltens bzw. Haftens kann aber auch vollständig oder teilweise oder zusätzlich extern erfolgen. Hierfür kann eine vom Erfassungsgerät externe zweite Erkennungsstufe, insbesondere als Bestandteil der externen Verarbeitungseinheit realisiert, vorgesehen sein, die dazu ausgebildet ist, einen Verlust des selbständigen Haltens bzw. Haftens des Erfassungsgeräts an der Produktpräsentationsvorrichtung zu erkennen, wobei für diese Art der Erkennung die übermittelten Erfassungsdaten oder die Daten des zweiten Sensors herangezogen werden.

Die Produktpräsentationsvorrichtung kann so ausgebildet sein, dass die Vorrichtungszone, auf der sich das Erfassungsgerät bewegt, auch zur Präsentation von Produkten vorgesehen ist, was jedoch impliziert, dass das Erfassungsgerät zwischen den Produkten bewegt werden muss.

Gemäß einer bevorzugten Ausbildungsform weist die Produktpräsentationsvorrichtung jedoch zusätzlich zu der mindestens einen Vorrichtungszone, die zur Bewegung des Erfassungsgeräts vorgesehen ist, eine sich von der Vorrichtungszone unterscheidende Produktpräsentationszone zum Präsentieren von Produkten auf. Diese Maßnahme verhindert die Kollisionsgefahr des Erfassungsgeräts mit Gegenständen, die sich zwecks ihrer Präsentation in der Produktpräsentationszone befinden. Gleichzeitig sorgt diese Abtrennung der Zonen für ein entspanntes ungestörtes Einkaufserlebnis bei den Kunden, weil diese nicht durch das sich bewegende Erfassungsgerät abgelenkt werden.

Bevorzugt weist die Produktpräsentationsvorrichtung zumindest eine Regaletage auf, wobei die Vorrichtungszone zumindest teilweise aus einer zur Produktpräsentationszone hin gewandten Seite einer Rückwand oder auch Seitenwand der Regaletage und/oder einer Decke der Regaletage gebildet ist. Dies erlaubt eine einfache und zugleich klare Trennung der Zonen und eine Bewegung des Erfassungsgeräts in Zonen, in denen mit Sicherheit keine Produkte präsentiert werden.

Die Produktpräsentationsvorrichtung kann eine einzelne Vorrichtungszone aufweisen, die vom Erfassungsgerät befahrbar ist. Gemäß einer bevorzugten Ausbildungsform sind bei der Produktpräsentationsvorrichtung jedoch zumindest zwei voneinander unterschiedlich orientierte Vorrichtungszonen vorgesehen, die mit einem Übergangselement miteinander verbunden sind, wobei das Übergangselement derart ausgebildet ist, dass mit Hilfe der Bewegungsvorrichtung des Erfassungsgerätes ein Übersetzen von der einen Vorrichtungszone zur anderen Vorrichtungszone ermöglicht bzw. durchführbar ist, und zwar ohne, dass ein Halte- bzw. Haftverlust eintritt. Ein solches Übergangselement kann ein gekrümmtes Übergangsprofile sein, welches das Übersetzten von einer (im Wesentlichen ebenen) flächenhaft ausgebildeten Vorrichtungszone zu einer anderen (im Wesentlichen ebenen) flächenhaft ausgebildeten Vorrichtungszone ermöglicht. Es kann sich beim Übergangselement jedoch auch um eine Brücke oder einen Steg handeln, womit das Überfahren von Strukturelementen, beispielsweise das Überfahren von Stützen oder Regalbodenabschlüssen zwischen zwei Vorrichtungszonen oder dazwischenliegenden Lücken, ermöglicht ist. Es kann sich beim Übergangselement jedoch auch um ein Tunnel handeln, der durch eine Stütze der Produktpräsentationsvorrichtung oder durch plattenförmige Begrenzungselemente hindurchführt.

Ein solches Übergangselement kann auch mehrere Produktpräsentationsvorrichtungen miteinander verbinden. Auch können zusätzliche Vorrichtungszonen außerhalb der Produktpräsentationsvorrichtung vorgesehen sein. So können beispielsweise Vorrichtungszonen auf der Decke und der Innenwand des Geschäftslokals vorgesehen sein, die mit Übergangselementen mit den Vorrichtungszonen innerhalb der Produktpräsentationsvorrichtungen verbunden sind, sodass das Erfassungsgerät über diese Wege zwischen unterschiedlichen Produktpräsentationsvorrichtungen übersetzen kann.

Auch wenn das Erfassungsgerät dazu ausgebildet sein, selbst gegen die Wirkung der Schwerkraft an Vorrichtungszonen entlangzufahren. Auch sei angemerkt, dass das Erfassungsgerät dazu ausgebildet sein kann, ebenfalls am Boden eines Geschäftslokals zu fahren. So kann das Erfassungsgerät beispielsweise tagsüber autonom in einer Produktpräsentationsvorrichtung oder einer Gruppe von miteinander mittels Übergangselementen verbundenen Produktpräsentationsvorrichtungen fahren und dort die Zustände der Produktpräsentationsvorrichtung bzw. der Produktpräsentationsvorrichtungen erfassen. Nach Geschäftsschluss kann das Erfassungsgerät über den Boden des Geschäftslokals zur nächsten Produktpräsentationsvorrichtungen oder zur nächsten Gruppe von Produktpräsentationsvorrichtungen fahren, um dort beispielsweise während der Nachtstunden, insbesondere jedoch während des nächsten Geschäftstags, die Zustände der Produktpräsentationsvorrichtung bzw. der Produktpräsentationsvorrichtungen zu erfassen.

Weiterhin kann das Erfassungsgerät einen Bildschirm aufweisen. Dieser Bildschirm kann dazu ausgebildet sein, unterschiedliche Informationen betreffend die Erfassungsdaten oder das Erfassungsgerät anzuzeigen. So kann der Bildschirm beispielsweise dazu ausgebildet sein, den Akkustand des Energiespeichers des Erfassungsgeräts anzuzeigen. Bevorzugt ist der Bildschirm dazu ausgebildet, eine eindeutige Identifikationsnummer des Erfassungsgeräts anzuzeigen. Dies erlaubt bei Verwendung mehrerer solcher Erfassungsgeräte eine einfache Handhabung.

Abschließend sei noch erwähnt, dass die erwähnten elektronischen Geräte natürliche eine Elektronik aufweisen. Die Elektronik kann diskret oder durch integrierte Elektronik oder auch durch eine Kombination aus beiden aufgebaut sein. Auch können Microcomputer, Micro Controller, Application Specific Integrated Circuits (ASICs), ggf. in Kombination mit analogen oder digitalen elektronischen Peripheriebausteinen zum Einsatz kommen. Die erörterten Funktionen der elektronischen Geräte werden mit Hilfe der erwähnten Hardware-Komponenten, ggf. in Kombination mit einer Software, die auf den programmierbaren Komponenten ausgeführt wird, realisiert. Funkgeräte weisen üblicherweise als Bestandteil eines Transceiver-Moduls eine Antennenkonfiguration inklusive Anpassungsnetzwerk usw. zum Senden und Empfangen von Funk-Signalen auf.

Bevorzugt ist der Sensor batteriebetrieben.

Zusammengefasst bilden die erwähnten Maßnahmen ein System zum Erfassen eines Zustands einer Produktpräsentationsvorrichtung.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
Fig. 1 ein Erfassungsgerät gemäß einem ersten Ausführungsbeispiel,
Fig. 2 das Erfassungsgerät gemäß der Figur 1 in einer weiteren Ansicht,
Fig. 3 ein zweites Ausbildungsbeispiel des Erfassungsgeräts,
Fig. 4 eine Seitenansicht des an einer Vorrichtungszone selbst-haftenden Erfassungsgeräts,
Fig. 5 das Erfassungsgerät gemäß der Figur 4 betrachtet von der Vorrichtungszone aus,
Fig. 6 ein Blockschaltbild des Erfassungsgeräts gemäß dem zweiten Ausführungsbeispiel,
Fig. 7 eine Produktpräsentationsvorrichtung betrachtet aus einer ersten Perspektive, in der das Erfassungsgerät sichtbar ist,
Fig. 8 die Produktpräsentationsvorrichtung betrachtet aus einer zweiten Perspektive, in der das Erfassungsgerät nicht sichtbar ist.

### Beschreibung der Ausführungsbeispiele

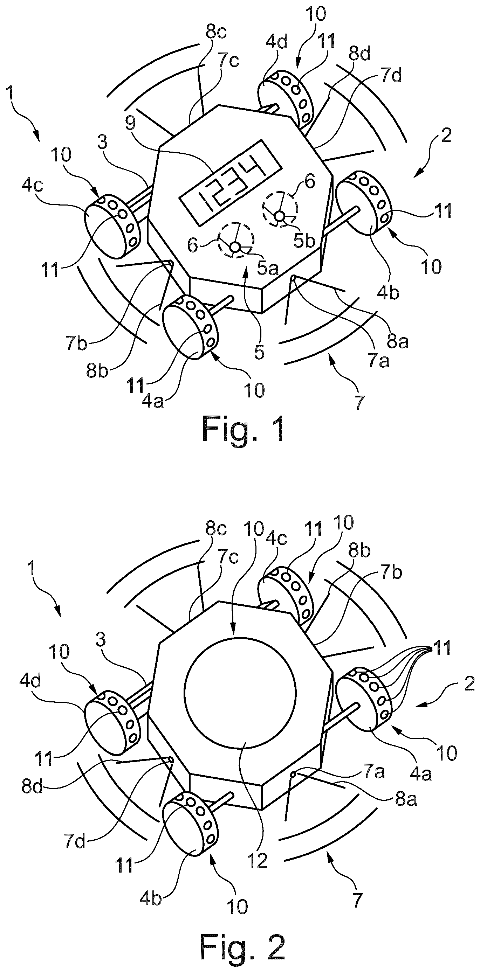

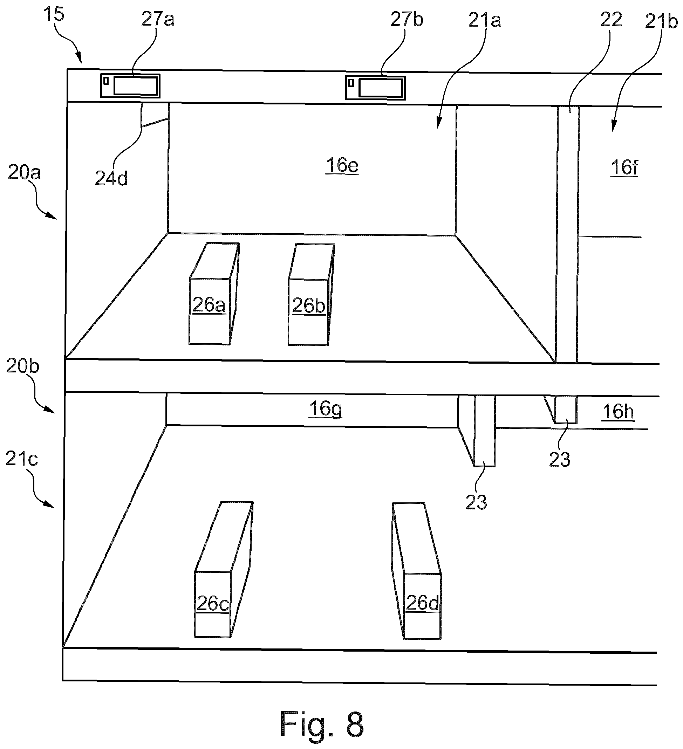

In der Figur 1 ist ein erstes Ausführungsbeispiel eines Erfassungsgeräts 1 realisiert als Miniaturfahrzeug zu sehen, das zum Erfassen von Zuständen einer Produktpräsentationsvorrichtung ausgebildet ist, wie zum Beispiel des Belegungszustand eines Regals 15 mit Produkten 26a bis 26d (siehe z.B. Figur 8). Die Figur 1 zeigt die Unterseite des Erfassungsgeräts 1. Das Erfassungsgerät 1 weist eine Bewegungsvorrichtung 2 auf, die eine Lenkvorrichtung 3 und einen Elektromotor 31a aufweist, der sich im inneren des Erfassungsgeräts 1 befindet und daher nicht dargestellt ist. Die Bewegungsvorrichtung 2 weist weiterhin vier Räder 4a, 4b, 4c und 4d auf. Der Elektromotor 31a ist in diesem Ausführungsbeispiel dazu ausgebildet zwei Räder 4a und 4b, die entlang einer Achse positioniert sind, gemeinsam anzutreiben. Die Lenkvorrichtung 3 ist dazu ausgebildet, die beiden anderen Räder 4c und 4d gemeinsam gleichsinnig zu verschwenken um ein Kurvenfahren zu ermöglichen. Dazu weist die Lenkvorrichtung 3 neben den mechanischen Komponenten einen im Inneren des Erfassungsgeräts 1 lokalisiert und daher nicht sichtbaren Schrittmotor auf, um die Räder 4c und 4d in die gewünschte Position zu verschwenken.

Das Erfassungsgerät 1 weist weiterhin einen ersten Sensor 5 auf, der zwei Sensorbestandteile aufweist, nämlich einen Sender 5a und einen Empfänger 5b. Diese von außen sichtbaren Sensorbestanteile werden von dem Sensor 5 verwendet, eine Abstandsmessung mittels Laufzeitmessung eines vom Sender 5a ausgesandten Signals durchzuführen, wobei das Signal nach Reflexion an einem Gegenstand von dem Empfänger 5b empfange wird und sich die Laufzeit als Zeitdifferenz zwischen dem Aussenden und Empfangen ergibt. Der erste Sensor 5 erfasst Objekte innerhalb eines Erfassungsbereichs 6 (in der Fig. 1 nur grob angedeutet eingezeichnet), der sich im Wesentlichen trichterförmig von dem Erfassungsgerät 1 weg öffnet.

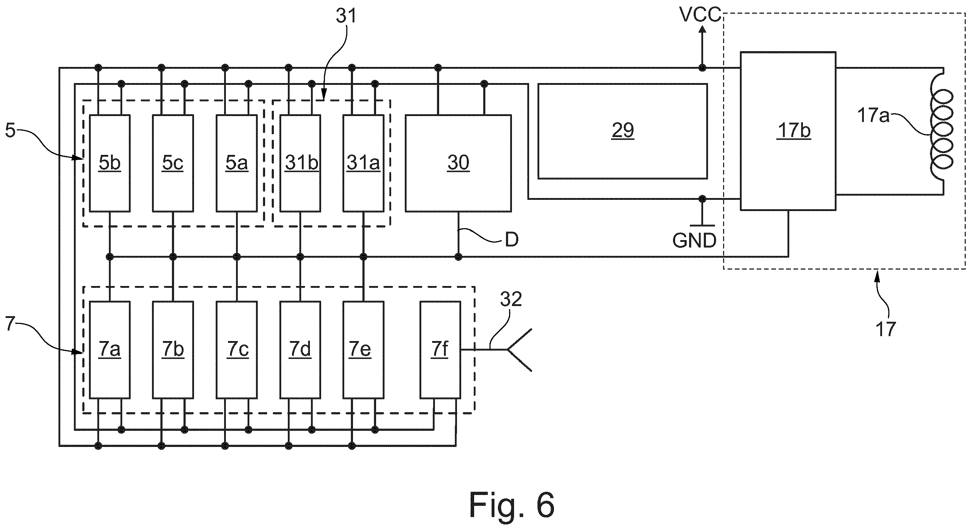

Das Erfassungsgerät 1 weist weiterhin einen zweite Sensoren 7 auf der vier zweite Sensoreinheiten bzw. Sensorelemente 7a-7d aufweist. Jede dieser zweiten Sensoreinheiten 7a-7d erfasst die Umgebung benachbart zu der jeweiligen Seite des Erfassungsgeräts 1 innerhalb eines jeweiligen zweiten Erfassungsbereichs 8a-8d. In diesem Ausführungsbeispiel sind die zweiten Sensoreinheiten 7a-7d ebenfalls - also wie vorangehend im Kontext des ersten Sensors 5 - zum Durchführen einer Abstandsmessung mittels Laufzeitmessung ausgebildet. Weiterhin weist der zweite Sensor 7 ein NFC-Modul 7e und ein Wi-Fi-Modul 7f auf, wobei sich beide im inneren des Erfassungsgeräts 1 befinden (vergleiche auch Fig. 6.), die jeweils zur Durchführung einer Indoor-Ortung vorgesehen sind bzw. zur Anwendung kommen, worauf nachgehend noch im Detail eingegangen ist.

Das Erfassungsgerät 1 weist einen Bildschirm 9 auf. Dieser Bildschirm 9 zeigt eine individuelle Identifikationsnummer an, die eine eindeutige Bestimmung bzw. Identifizierung des Erfassungsgeräts 1 zulässt.

Das Erfassungsgerät 1 weist weiterhin auch als ein erstes Funkmodul zum Senden und Empfangen von Daten das Wi-Fi-Modul 7f auf (vergleiche auch Figur 6).

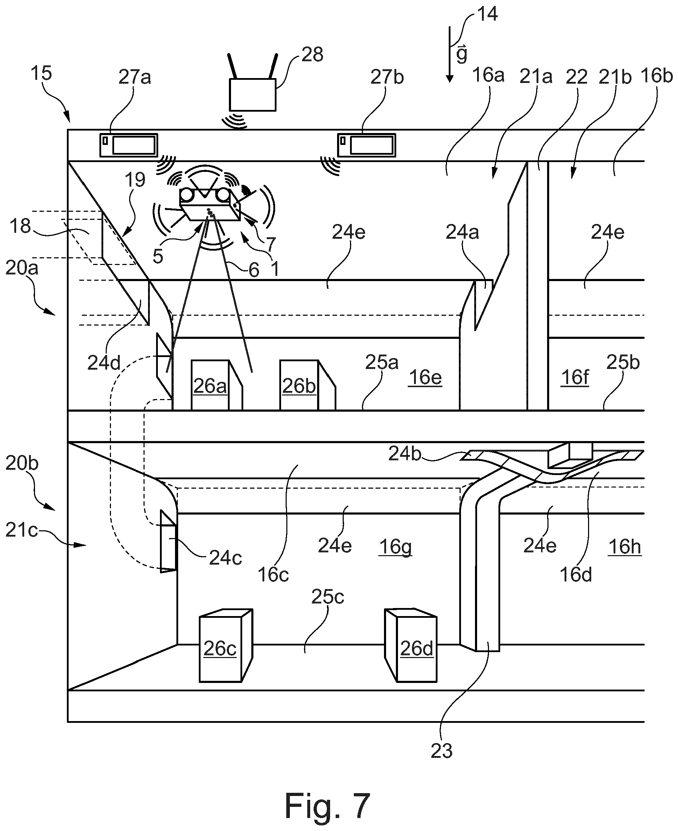

Mit Verweis auf Figur 6 ist festgehalten, dass das NFC-Modul 7e, das Wi-Fi-Modul 7f, die Lenkvorrichtung 3 und der Elektromotor 31a der Bewegungsvorrichtung 2 mit einer Steuereinheit 30 verbunden sind. Die Steuereinheit 30 ist dazu ausgebildet, die Daten des NFC-Moduls 7e, des ersten Funkmoduls 31, des ersten Sensors 5 und des zweiten Sensors 7 zu verarbeiten und zu interpretieren. Auf Basis dieser Informationen kann die Steuereinheit 30 autonom entscheiden, welche Bereiche des Regals 15 (siehe Figur 7) abgefahren werden müssen, um eine möglichst vollständige Erfassung von Produktpräsentationszonen, im konkreten Regalböden 25a-25c, mit den darauf abgestellten Produkten 26a bis 26d durchführen zu können und dabei die Lenkvorrichtung 3 und den Elektromotor 31a dementsprechend anzusteuern, um das Erfassungsgerät 1 entsprechend zu bewegen bzw. zu manövrieren.

Das Erfassungsgerät 1 weist als Halte- bzw. Haftvorrichtung eine Magnet-Halte- bzw. Haftvorrichtung auf 10. Diese Magnet-Halte- bzw. Haftvorrichtung ist insbesondere in der Figur 2 ersichtlich, welche die Oberseite das Erfassungsgerät 1 zeigt.

Befindet sich das Erfassungsgerät 1 in einem Regal 15 bestimmungsgemäß im Einsatz, so ist die Oberseite benachbart zu einer Vorrichtungszone positioniert, an der sich das Erfassungsgerät 1 entlang bewegt und die Unterseite ist einer Produktpräsentationszone zugewandt, deren Zustand zu erfassen ist.

In der Figur 2 sieht man also jene Seite des Erfassungsgeräts 1 die sich bei bestimmungsgemäßer Verwendung unmittelbar benachbart zu der Fläche befindet, auf der das Erfassungsgerät 1 fährt bzw. sich bewegt. Im vorliegenden Fall weist die Halte- bzw. Haftvorrichtung 10 mehrere Magnete auf, die sich jeweils in den Rädern 4a-4d befinden und daher im Sinne der Unterscheidbarkeit als Radmagneten 11 bezeichnet werden. Diese sind der Übersichtlichkeit wegen nur in der Figur 2 bei einem der Räder 4a vollständig mit Bezugszeichen gekennzeichnet. Es sei jedoch angemerkt, dass jedes der Räder 4a-4d mehrere entlang des Umfangs äquidistant verteilte Radmagnete 11 aufweist. Im vorliegenden Fall weist die Halte- bzw. Haftvorrichtung 10 zusätzlich einen Zentrummagneten 12 auf, der in der Mitte der Oberseite des Erfassungsgerätes 1 äquidistant beabstandet zu den vier Rädern 4a-4d platziert ist. Das so mit den Magneten 11 und 12 ausgerüstete Erfassungsgerät 1 kann sich selbst-haltend bzw. selbst-haftend an einer aus einem ferromagnetischen Material gefertigten Regalstruktur, wie beispielsweise der Unterseite eines aus einem Stahlblech gefertigten Regalbodens oder einer Rückwand bzw. einer Seitenwand des Regals 15 bewegen. Die Magnete 11 und 12 halten das Erfassungsgerät 1 durch die mit ihrer Hilfe erzeugte anziehende Magnetkraft an der jeweiligen Regalstruktur, ohne jedoch die freie bzw. autonome Beweglichkeit des Erfassungsgeräts 1 zu beeinträchtigen.

Der Vollständigkeit wegen sei festgehalten, dass das Erfassungsgerät 1 natürlich auch nur mit den Radmagneten 11 oder auch nur mit dem Zentrummagneten 12 ausgerüstet sein kann.

Bei der Ausbildungsform, bei der die Radmagneten 11 vorgesehen sind, und die Räder 4a-4d von jeder Seite betrachtet die äußersten Punkte des Erfassungsgeräts 1 bilden, ergibt sich der Vorteil, dass das Erfassungsgerät 1 von sich aus zum Beispiel ausgehend vom Fußboden eines Geschäftslokals aus einen Aufstieg auf die aus Stahlblech gefertigte Regalstruktur durchführen kann, weil die Räder 4a bis 4d direkt magnetische Kräfte übertragen können und somit an dem Stahlbleck anhaften. Dies kann zum Beispiel dann wichtig sein, wenn das Erfassungsgerät 1 nach Verlust des Haftens bzw. Haltens, beispielsweise nach einer vorsätzlichen oder unbeabsichtigten Entnahme des Erfassungsgeräts 1 aus dem Regal, auf dem Fußboden des Geschäftslokals zum Liegen kommt.

Wird bei dem Erfassungsgerät 1 festgestellt, dass es mit der Oberseite nach oben zu liegen kommt, kann es vorab zu einer nicht magnetisierbaren Struktur, wie z.B. zu einer Betonwand, fahren, dort durch Reibung der Räderpaare 4a und 4b sowie 4c und 4d sich an der Wand aufrichten und in weiterer Folge nach hinten umkippen, damit die Oberseite nun nach unten orientiert ist. In dieser Orientierung kann das Erfassungsgerät 1 nun wieder zu einem Regal 15 hinfahren und sich dort selbsthaltend in die Regalstruktur hineinbewegen, sodass während der Bewegung die Oberseite knapp benachbart zu der Struktur des Regals ausgerichtet ist.

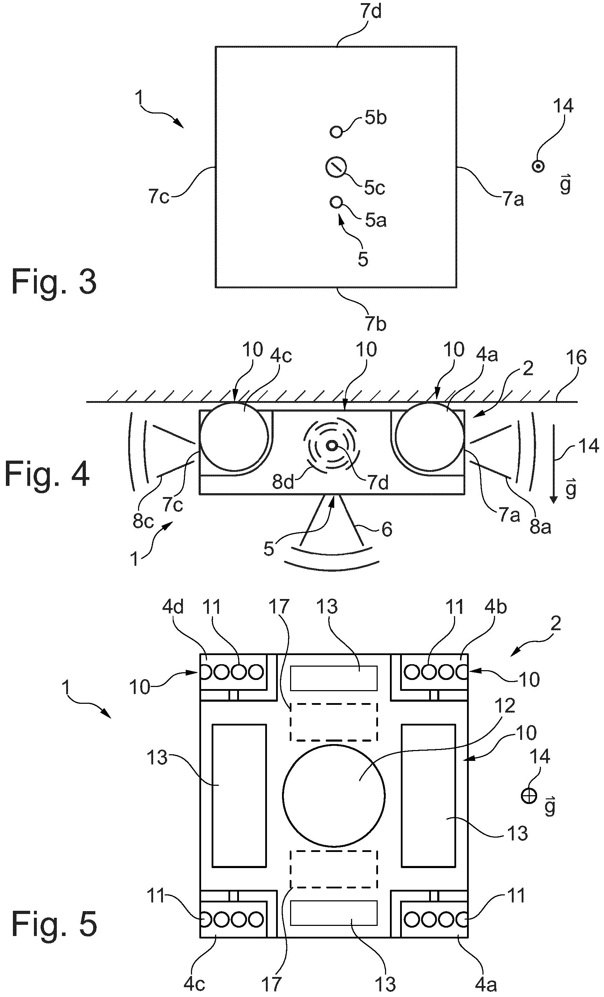

Die Figuren 3 bis 5 zeigen ein zweites Ausführungsbeispiel des Erfassungsgeräts 1. Im Unterschied zum zuvor erörterten ersten Ausführungsbeispiel, weist dieses keine Lenkvorrichtung 3 auf. Im vorliegenden Fall weist das Erfassungsgerät 1 einen zweiten Elektromotor 31b auf, der sich wie der erste Elektromotor 31a im Inneren des Erfassungsgeräts 1 befindet und daher nicht sichtbar ist (siehe auch Figur 6). Jeder Elektromotor 31a und 31b treibt jeweils ein Rad 4a, 4b an, wobei die beiden angetriebenen Räder 4a, 4b entlang einer Achse positioniert sind. Zum Kurvenfahren können diese Räder 4a, 4b mit unterschiedlichen Drehzahlen bewegt werden. Es handelt sich also um eine Art einer Panzerlenkung. Alternativ könnten auch vier Elektromotoren vorgesehen sein, wobei jeder Elektromotor ein Rad 4a-4b antreibt, oder es könnten zwei Elektromotoren vorgesehen sein, wobei der eine Elektromotor dann die Räder 4a und 4c an der einen Seite des Erfassungsgeräts 1 und der andere Elektromotor dann die anderen Räder 4b und 4d an der anderen Seite des Erfassungsgeräts 1 antreibt.

In der Figur 3 sieht man die Unterseite des Erfassungsgeräts 1 mit Blick auf den Sensor 5. Der Sensor 5 weist hier neben den zwei Sensoreinheiten 5a und 5b, die zum Durchführen einer Laufzeitmessung ausgebildet sind, zusätzlich eine Kamera 5c auf. Dies erlaubt die Durchführung der Erfassungsaktivität über zwei unterschiedliche Technologien und ggf. einen nachfolgenden Abgleich der separat gewonnenen Erfassungsergebnisse, um zu einem konsolidierten Ergebnis zu gelange.

Das Erfassungsgerät 1 weist in diesem Ausführungsbeispiel ebenfalls den zweiten Sensor 7 auf, der auch hier vier zweite Sensoreinheiten 7a-7d und ein NFC-Modul 7e und ein Wi-Fi-Modul 7f aufweist. Die vier zweiten Sensoreinheiten 7a-7d sind hier als Kameras ausgebildet.

Wie auch im zuvor erörterten Ausführungsbeispiel weist auch hier das Erfassungsgerät 1 die Steuereinheit 30 auf, wobei auch hier die Steuereinheit 30 dazu ausgebildet ist, beide Elektromotoren 31a und 31b so anzusteuern, dass das Erfassungsgerät 1 autonom manövrierbar ist.

Weiterhin ist in den Figuren 3 bis 5 die Fallbeschleunigung 14 eingezeichnet, um die Orientierung des Erfassungsgeräts 1 bei seinem bestimmungsgemäßen Einsatz in einem Regal an der Unterseite eines Regalbodens (also an der Decke einer Regaletage) zu veranschaulichen. Es sei jedoch auch angemerkt, dass das Erfassungsgerät 1 auch an einer senkrecht stehenden Wand fahren kann, wobei dann das Erfassungsgerät 1 entsprechend anders zur Fallbeschleunigung 14 orientiert ist.

In der Figur 4 ist das Erfassungsgerät 1 in einer Seitenansicht dargestellt, wobei es sich mit Hilfe seiner magnetischen Halte- bzw. Haftvorrichtung 10 selbstständig "kopfüber" an einer Vorrichtungszone 16 (im konkreten Fall der Unterseite eines Regalbodens) eines Regals 15 hält. In dieser Ansicht ist auch der Erfassungsbereich 6 angedeutet, wobei dieser Erfassungsbereich 6 ausgehend vom Sensor 5 im Wesentlichen weg von der Vorrichtungszone 16 auf den darunter liegenden Bereich der Produktpräsentationsvorrichtung 15 ausgerichtet ist, sodass der Zustand dieses Bereichs durch den Sensor 5 erfassbar ist. Weiterhin sind in dieser Ansicht auch die Erfassungsbereiche 8a, 8c und 8d der zweiten Sensoreinheiten 7a, 7c und 7d angedeutet, die im Wesentlichen eine Erfassung entlang der Vorrichtungszone 16, also im Wesentlichen in der Bewegungsebene des Erfassungsgeräts 1 ermöglichen.

In der Figur 4 ist auch die Auflagestelle der beiden Räder 4a und 4c zu sehen, wo die Räder 4a und 4c die Vorrichtungszone 16 berühren.

In der Figur 5 ist das Erfassungsgerät 1 mit Sicht von der Vorrichtungszone 16 auf das Erfassungsgerät 1, also auf die Oberseite des Erfassungsgeräts 1, dargestellt. Diese Darstellung gibt einen Blick auf die Halte- bzw. Haftvorrichtung 10 frei, die auch hier als Magnet-Halte- bzw. Magnet-Haftvorrichtung realisierte ist. Auch im vorliegenden Fall weist die Halte- bzw. Haftvorrichtung 10 mehrere Radmagneten 11 in jedem Rad 4a-4d, sowie den Zentrummagneten 12 auf. Zusätzlich weist die Halte- bzw. Haftvorrichtung 10 im vorliegenden Fall vier Randmagnete 13 auf, die im Wesentlichen entlang des Randes des Erfassungsgerätes 1 zwischen den Positionen der Räder 4a bis 4d platziert sind bzw. dazwischen verlaufen. Die Randmagnete 13 können vorgesehen sein, um die magnetische Anziehungskraft weiter zu verstärken.

Es kann auch auf einzelne oder mehrere dieser Magnete 11, 12, 13 verzichtet werden oder eine andere Platzierung dieser Magnete 11, 12, 13 gewählt werden, solange das Halten bzw. Haften des Erfassungsgeräts 1 an der Vorrichtungszone 16 sichergestellt ist.

In Bezug auf die Räder 4a bis 4d sei noch allgemein erwähnt, dass diese unabhängig davon, ob sie mit Radmagneten 13 ausgerüstet sind oder ohne verwendet werden, bevorzugt aus einem weichen Kunststoff gefertigt sind, um möglichst keine Rollgeräusche zu verursachen. Im Fall der Ausrüstig mit Radmagneten kann es von Vorteil sein, dass diese Radmagnete so befestigt sind, dass immer ein geringer Luftspalt zwischen dem jeweiligen Radmagneten und der mit dem jeweiligen Rad zusammenwirkenden Regalstruktur bleibt, um im Wesentlichen geräuschfrei abrollen zu können. Gleiches gilt im Übrigen auch allgemein für andere Maßnahmen (Ketten, Kogeln, usw.), die der Fortbewegung des Erfassungsgeräts 1, insbesondere dem direkten Zusammenwirken mit der Regalstruktur dienen, und an denen Magnete befestigt sind.

Weiterhin weist das Erfassungsgerät 1 eine Ladevorrichtung 17 (siehe Figur 5 und 6) auf, die zur induktiven Aufladung eines wieder aufladbaren Energiespeichers (vergleiche Figur 6) des Erfassungsgeräts 1 vorgesehen und ausgebildet ist.

Die Figur 6 zeigt ein elektronisches Blockschaltbild des Erfassungsgeräts 1 gemäß dem Ausführungsbeispiel der Figuren 3 bis 5. Dabei wurde bewusst auf die Darstellung der mechanischen Komponenten, insbesondere jener der Bewegungsvorrichtung 2, verzichtet. Es versteht sich jedoch von selbst, dass die Räder entweder direkt mit den Elektromotoren oder über ein Getriebe angetrieben sein können. Auch kann ein komplexeres Fahrwerk, z.B. inklusive Federung oder Dämpfung usw., vorgesehen sein.

Die Ladevorrichtung 17 des Erfassungsgeräts 1 weist eine Spule 17a und eine Gleichrichtungs- und Spannungsregelungseinheit 17b, ggf. auch eine Lade-Regler-Einheit, und einen daran angeschlossenen elektrischen Energiespeicher 29 auf. Die Ladevorrichtung 17 ist demnach dazu ausgebildet, mit Hilfe der Komponenten 17a und 17b den Energiespeicher 29 aufzuladen, wenn dies nötig ist.

Der Energiespeicher 29 versorgt alle weiteren Komponenten mit elektrischer Leistung und stellt eine Betriebsspannung VCC gegenüber einem Bezugspotential GND zur Verfügung.

Die Steuereinheit 30 ist mit einem Daten-Signal-Bus mit weiteren Komponenten, auf die nachfolgend noch eingegangen ist, verbunden und kann mit diesen Komponenten Daten und/oder Signale D austauschen.

Der Bewegungsvorrichtung 2 weist eine Bewegungsvorrichtungselektronik 31 auf, die den ersten Elektromotor 31a und den zweiten Elektromotor 31b und eine nicht weiter dargestellte Leistungselektronik zur Ansteuerung der Elektromotoren 31a und 31b aufweist. Die Bewegungsvorrichtungselektronik 31 wird mit Hilfe der Steuereinheit 30 angesteuert und damit die Umdrehungszahl, ggf. auch die Drehrichtung, der Elektromotoren 31a und 31b individuell einzustellen.

Der erste Sensor 5, konkret die zwei Sensoreinheiten 5a und 5b sowie die Kamera 5c, liefern ihre Daten D, hier Erfassungsdaten, über den Daten-Signal-Bus an die Steuereinheit 30, wo diese (ggf. vor-) verarbeitetet werden. Auch kann die Steuereinheit 30 die Funktionen des ersten Sensors 5 über den Daten-Signal-Bus beeinflussen oder steuern, wie z.B. die Breite des Erfassungsbereiches 6, ggf. auch den Fokus und/oder die Orientierung des Erfassungsbereiches 6.

Weiterhin ist auch der zweite Sensor 7, konkret dessen Sensoreinheiten 7a-7d sowie das NFC-Modul 7e und auch das Wi-Fi-Modul 7f, über den Daten-Signal-Bus an die Steuereinheit 30 angeschlossen, sodass diese Komponenten durch die Steuereinrichtung 30 ansteuerbar sind und insbesondere Daten D mit ihr austauschen können, die z.B. Steuerbefehle oder Sensor- und/oder-Kommunikationsdaten repräsentieren können. So kann der Sensor 7 angesteuert werden, um die Erfassung durchzuführen und die dabei generierten Daten D, hier Erfassungsdaten, (ggf. vor-) zu verarbeiten und dann über das Wi-Fi-Modul 7f abzugeben, die Identifikationsdaten D über das NFC-Modul 7e zu empfangen und zu verarbeiten oder auch die Funk-Aktivitäten über das Wi-Fi-Modul 7f abzuwickeln.

Das Wi-Fi-Modul 7f weist neben den üblicherweise vorgesehenen elektronischen Schaltkreisen zur Modulation wie auch zur Demodulation, die nicht im Detail eingezeichnet sind, eine Antenne 32 auf. In Bezug auf das NFC-Modul 7e sei erwähnt, dass aus Gründen der Übersichtlich auf die üblichen schaltungstechnischen Details verzichtet wurde. Natürlich kann der Sensor 7 auch nur die Komponenten 7a-7d umfassen und das NF-Modul 7e und das Wi-Fi-Modul 7f separat davon ausgebildet sein.

Es sei erwähnt, dass das Wi-Fi-Modul 7f funktionell dem zweiten Sensor 7 zuordenbar ist, und daher gemäß diesem Ausführungsbeispiel dort auch baulich integriert sein kann. Daher kann der zweite Sensor 7 auch autonom auf das Wi-Fi-Modul 7f zugreifen und seine Erfassungsdaten D auch ohne Zutun der Steuereinheit 30 funktechnisch abgeben.

Weiterhin sei erwähnt, dass die Funktionalität der autonomen Bewegung auch ohne einen Zugriff der Steuereinheit 30 auf das Wi-Fi-Modul 7f realisiert sein kann. Das Erfassungsgerät 1 bewegt sich dann autonom gesteuert durch die Steuereinheit 30, während unabhängig davon die Erfassung des Zustands bzw. der Zustände der Präsentationsvorrichtung durch den ersten Sensor 7f erfolgt, der seine Erfassungsdaten D mit Hilfe des Wi-Fi-Moduls 7f abgibt.

Ist jedoch die Steuereinheit 30 mit dem Wi-Fi-Modul 7f über den Daten-Signal-Bus gekoppelt, lässt ich das Erfassungsgerät 1 auch per Funk fernsteuern. Dabei können auch interne Geräteparameter, wie etwa der Ladezustand des Energiespeichers oder auch interne Erfassungsdaten D betreffende die Bewegungsvorrichtung 2, von extern per Funk abgerufen werden. Darauf basierend lässt sich z.B. rechtzeitig ein Ladestopp einplanen oder das Erfassungsgerät 1 zeitgerecht einer Wartung der Bewegungsvorrichtung 2 zuführen. Auch können damit beim Erfassungsgerät 1 autonom durch die (Vor-)Verarbeitung der Erfassungsdaten D festgestellte potentielle Fehlerquellen, wie z.B. Verunreinigungen der äußeren Elemente des ersten Sensors 7, an eine das Erfassungsgerät 1 steuernde Instanz (z.B. der Server oder die cloudbasierte Verwaltungssoftware) kommuniziert werden und dort in Abhängigkeit von der Schwere des festgestellten Problems weitere Maßnahmen automatisch abgeleitet werden und das Erfassungsgerät 1 dementsprechend angesteuert werden. So lässt sich das Erfassungsgerät 1 z.B. sofort aus dem Verkehr ziehen, wenn die vom ersten Sensor 7 gelieferten Erfassungsdaten D als potenziell unbrauchbar einzustufen sind. Das Erfassungsgerät 1 kann dann ohne weitere Übermittlung von Erfassungsdaten D zu einer Servicestation gefahren werden, währen z.B. gleichzeitig ein weiteres Erfassungsgerät 1 gestartet wird, welches die Erfassungsaufgaben des zu servierenden Erfassungsgeräts 1 übernimmt. Auch lässt sich das Erfassungsgerät 1 sofort stoppen, wenn potenzielle Problem mit der Bewegungsvorrichtung 2 auftreten, wobei das Erfassungsgerät 1 in diesem Fall seine (z.B. durch Kartographierung der eigenen Bewegung bekannte) ungefähre Position per Funk abgibt, damit es vom Servicepersonal leichter aufgefunden werden kann.

Die Steuereinheit 30 weist weiterhin eine Erkennungsstufe auf, die die Daten D interpretiert und einen Verlust des Haltens bzw. Haftens feststellt, wie es im allgemeinen Teil der Beschreibung beschrieben ist.

An dieser Stelle sei auch festgehalten, dass das Erfassungsgerät 1 gemäß dem in den Figuren 1 und 2 dargestellten Ausführungsbeispiel ähnlich aufgebaut ist, wobei anstatt dem zweiten Elektromotor 31b der Schrittmotor der Lenkvorrichtung 3 vorgesehen ist, um eine Richtungsänderung zu ermöglichen, und auf die Kamera 5c des ersten Sensors 5 verzichtet wird.

In der Figur 7 ist ein Ausschnitt der Produktpräsentationsvorrichtung ausgebildet als das Regal 15 dargestellt, welches Regal 15 aus einer für Kunden eines Geschäfts eher unüblichen Perspektive von schräg unten nach oben betrachtet wird. In dem Regal 15 befindet sich das Erfassungsgerät 1 gemäß dem Ausführungsbeispiel der Figuren 3 bis 5. Von dem Regal 15 sind Abschnitte zweier Regaletagen, nämlich eine obere Regaletage 20a und eine untere Regaletage 20b dargestellt. Die obere Regaletage 20a ist in zwei Regalabschnitte, in den linken Regalabschnitt 21a und den rechten Regalabschnitt 21b unterteilt, wobei die beiden Regalabschnitte 21a und 21b durch eine Trennwand 22 getrennt sind. Die zweite Regaletage 20b weist nur einen einzigen unteren Regalabschnitt 21c auf in dem sich eine Stütze 23 befindet.

Jeder Regalabschnitt 21a bis 21c weist jeweils eine Produktpräsentationszone 25a bis 25c zum Präsentieren von Produkten 26a bis 26d auf. Die Produktpräsentationszonen 25a bis 25c sind flächenhaft ausgebildet und ermöglichen ein Abstellen der Produkte 26a bis 26d auf der Produktpräsentationszone 25a bis 25c, um diese zu präsentieren.

Das Regal 15 weist mehrere Vorrichtungszonen 16a bis 16h auf. Die Vorrichtungszonen 16a bis 16h bestehen aus einer ersten Gruppe von Vorrichtungszonen 16a bis 16d, die aus der oberen Decke der jeweiligen Regaletage 20a, 20b gebildet ist und einer zweiten Gruppe von Vorrichtungszonen 16e bis 16h die aus zur Produktpräsentationszone 25a bis 25c hin gewandten Seite der Rückwände der jeweiligen Regaletage 20a und 20b des Regals 15 gebildet sind. Die Vorrichtungszonen 16a bis 16h unterscheiden sich also von den Produktpräsentationszonen 25a bis 25c. Die Vorrichtungszonen 16a bis 16h dienen nicht der Ablage der Produkte 26a bis 26d zwecks Präsentation. Die Vorrichtungszonen 16a bis 16h diene vielmehr der Fortbewegung des Erfassungsgeräts 1 innerhalb des Regals 15.

Um auch ein zusammenhängendes Befahren der individuellen Vorrichtungszonen 16a bis 16e zu ermöglichen, weist das Regal 15 mehrere Übergangelemente auf, welche die Vorrichtungszonen 16a-16h miteinander für das Erfassungsgerät 1 in selbsthaltender Weise befahrbar verbinden. Die Übergangselemente sind so geformt und materiell ausgebildet, dass sie durch das Erfassungsgerät 1 derart befahrbar sind, dass die selbsthaftende bzw. selbsthaltende Wirkung des Erfassungsgeräts 1 beim Übersetzen zwischen den Vorrichtungszonen 16a bis 16e erhalten bleibt.

Als Übergangselemente sind hier beispielsweise gekrümmte Übergangsprofile 24e dargestellt, die jeweils eine Vorrichtungszone 16a bis 16d der ersten Gruppe mit einer Vorrichtungszone 16e bis 16h der zweiten Gruppe verbinden.

Ein weiteres Übergangselement ist als Brücke 24b ausgebildet und verbindet die zwei zur ersten Gruppe gehörenden Vorrichtungszonen 16c und 16d der unteren Regaletage 20b. Die Brücke 24b ermöglicht dem Erfassungsgerät 1 ein Überwinden der Stütze 23.

Der linke Regalabschnitt 21a und der rechte Regalabschnitt 21b sind mit einem weiteren Übergangselement, konkret durch einen ersten Tunnel 24a, der die Trennwand 22 durchtunnelt, hindurch miteinander verbunden, sodass das Erfassungsgerät 1 zwischen den beiden Vorrichtungszonen 16a und 16b der ersten Gruppe der oberen Regaletage 20a hin und her fahren kann. Hier bildet konkret der zwischen den Vorrichtungszonen 16a und 16b verlaufende Tunnelboden des Tunnels 24a das durch das Erfassungsgerät 1 befahrbare Übergangselement. Gleiches gilt auch im Fall einer Separierung eines Regalbodens durch sogenannte Regal-Teiler, welche die Produktgruppen auf einem Regalboden separieren, wobei das Erfassungsgerät 1 oberhalb des Regal-Teilers kopfüber nach unten hängend an der Unterseite des nächsthöheren Regalbodens zwischen den Produktgruppen hin und her wechseln kann.

Die Vorrichtungszonen 16e und 16g der zweiten Gruppe des linken Regalabschnitts 21a und des unteren Regalabschnitts 21c sind über einen - hier im Wesentlichen bogenförmig ausgebildeten - Weg 24c miteinander verbunden, sodass das Erfassungsgerät 1 zwischen der oberen Regaletage 20a und der unteren Regaletage 20b hin und her fahren kann.

Weiterhin weist das Regal 15 einen zweiten Tunnel 24d mit einem als Übergangselement fungierenden durch das Erfassungsgerät 1 befahrbaren Tunnelboden auf, der das Regal 15 mit weiteren, benachbarten Regalen und/oder einem Wartungsraum verbindet bzw. diese für das Erfassungsgerät 1 befahrbar macht.

Am Anfang dieses zweiten Tunnels 24d befindet sich tunnelbodenseitig eine Energieversorgungszone 19, die eine Ladestation 18 aufweist. Das Erfassungsgerät 1 ist dazu ausgebildet sich bei Energiebedarf rechtzeitig in die Energieversorgungszone 19 zu begeben und sich so in Bezug zu der Ladestation 18 zu platzieren, dass die Ladestation 18 auf induktive Weise die Ladevorrichtung 17 des Erfassungsgeräts 1 mit Energie versorgen kann. Die induktiv übertragene Energie wird in dem Energiespeicher 29 des Erfassungsgeräts 1 gespeichert. Die Ladestation 18 selbst bezieht ihre Energie von einer wieder aufladbaren Batterie, ggf. auch austauschbaren Batterie, deren Kapazität für mehrere Ladezyklen des Erfassungsgeräts 1 reicht. Alternativ kann die Ladestation 18 auch kabelgebunden mit Energie versorgt werden. An dieser Stelle sei noch erwähnt, dass die Ladstation 18 natürlich auch an jeder anderen beliebigen Position lokalisiert sein kann, wie z.B. auch innerhalb der Grenzen der Vorrichtungszonen 16a bis 16h, um möglichst einfach auffindbar und anfahrbar zu sein.

Die Übergangselemente sind gekrümmt und/oder eben ausgeführt und aus magnetischem Material, wie z.B. demselben Material wie die Vorrichtungszonen 16a bis 16h, insbesondere z.B. Stahlblech, hergestellt, sodass das Erfassungsgerät 1 beim Befahren auch dort magnetisch anhaftet.

An den vorderen Kanten der Regalböden sind an dem Regal 15 NFCfähige elektronischen Regaletiketten 27a und 27b platziert. Um die Darstellung nicht zu überladen wurden beispielhaft nur zwei solcher Regaletiketten dargestellt, wobei an einem solchen Regal üblicherweise wesentlich mehr, insbesondere korrespondierend zu den Positionen der zugehörigen Produkte, platziert sind. Diese Regaletiketten 27a und 27b zeigen an ihren jeweiligen Position Produkt- und/oder Preisinformationen an und sind dazu ausgebildet mittels ihrer NFC-Elektronik Identifikationsdaten an das Erfassungsgerät 1 abzugeben, wenn sich dieses in der unmittelbaren Nähe befindet. Weil die Positionen der Regaletiketten 27a und 27b im Geschäftslokal in einem Planogramm präzise hinterlegt sind, lassen diese Identifikationsdaten eine präzise Ortsbestimmung für das Erfassungsgerät 1 zu. Zu diesem Zweck werden die übermittelten Identifikationsdaten per Funk von dem Erfassungsgerät 1 an einen Server abgegeben, wo auch die Daten des Planogramms verfügbar sind, und auf Grund der beim Server eintreffenden Identifikationsdaten die momentane Position des Erfassungsgeräts 1 festgestellt.

Außerhalb des Regals 15 sind im Geschäftslokal, in dem sich eine Vielzahl solcher Regal 15 befinden, mehrere Access-Points 28 verteilt im Geschäftslokal vorhanden, von denen aus Güden der Übersichtlichkeit nur ein einziger in der Figur 7 eingezeichnet ist. Diese Access-Points 28 erlauben eine funktechnische Kommunikation des Erfassungsgeräts 1 mit einer Verarbeitungseinheit (dem Server), ggf. auch eine Wi-Fi basierte Ortung des Erfassungsgeräts 1 im Geschäftslokal. Die Access-Points 28 können auch zur Kommunikation gemäß den in dem allgemeinen Teil der Beschreibung offenbarten Kommunikations-Verfahren bzw. -Protokollen ausgebildet sein, um mit den elektronischen Regaletiketten 27a und 27b zu kommunizieren.

Mit Hilfe der Steuereinheit 30, die auf einer Software basiert, die auf einem Prozessor abgearbeitet wird, und die die Daten D der Sensorik (vorwiegend der zweiten Sensoreinheiten 7a-7d) nützt, kann sich das Erfassungsgerät 1 autonom in den jeweiligen Vorrichtungszonen 16a bis 16h bewegen bzw. manövrieren, zwischen den einzelnen Vorrichtungszonen 16a bis 16h, also zwischen den einzelnen Regalabschnitten 21a bis 21c wie auch zwischen den Regaletagen 20a und 20b und sogar auch zwischen den einzelnen Regalen 1 übersetzen. Dabei reicht es grundsätzlich aus, dass die Navigation-Software das Erfassungsgerät 1 ähnlich einem konventionellen autonom fahrenden Rasenmäher bewegt, also keine hohe navigationstechnische Leistungsfähigkeit aufweist, wie es für eine autonome Navigation im Straßenverkehr erforderlich ist, sondern vielmehr darauf ausgelegt ist, dass das Erfassungsgerät 1 mit ausreichender Spurdichte korrespondierend zu dem zu erfassenden Bereich im jeweiligen Regal 1 bewegt wird. Die Steuereinheit erkennt dabei Hindernisse, wie etwas Fahrwegbegrenzungen, ändert daraufhin die Fahrtrichtung und setzt die Bewegung fort usw. Dabei kann sie die Bewegungszonen kartographieren, diese speichern und zu späteren Zeiten wieder für die Navigation nützen, insbesondere um bei Bedarf die Ladestation 18 rasch anzufahren oder um auf den dafür vorgesehenen Übergangselementen zwischen den Vorrichtungszonen 16a bis 16d zu wechseln.

Dies erlaubt es dem Erfassungsgerät 1 den Erfassungsbereich 6 seines ersten Sensors 5 durch das gesamte Regal 15 (bzw. sogar durch mehrere Regale 15) zu bewegen und so den Zustand, wie z.B. die Belegung und/oder Verteilung der Produkte, des gesamten Regals 15 zu erfassen. Der Zustand in diesem Ausführungsbeispiel betrifft insbesondere die Belegung, also ob und welche Produkte 26a bis 26d wo im Regal 15 platziert sind und gegebenenfalls wie der Zustand dieser Produkte ist, also beispielweise ob Schäden (z.B. an der Verpackung, wie Druckschäden, Einrisse oder auch Bruchspuren) erkennbar sind, oder ob das Ablaufdatum bereits überschritten ist. Hierfür ist die Steuereinheit 30 dazu ausgebildet eine Bildverarbeitung mit Mustererkennung durchzuführen. Zusätzlich könnte der erste Sensor 5 natürlich weitere Sensoreinheiten aufweisen, um weitere Größen, wie die Temperatur oder Feuchtigkeit an der Stelle der Erfassung, also in der Nachbarschaft, vorwiegend oberhalb der Produkte, zu erfassen.

Zum gezielten Navigieren im Regal 15 zieht das Erfassungsgerät 1 (neben gegebenenfalls Daten des ersten Sensors 5) wie bereits erwähnt insbesondere die Daten des zweiten Sensors 7 heran. Hier stehen beispielsweise die Bild- bzw. Videodaten der zweiten Sensoreinheiten 7a-7d zur Verfügung. Aber auch die Identifikationsdaten der elektronischen Regaletiketten 27a, 27b sowie die Ortung über die Access-Points 28 kann zur Navigation genutzt werden. Selbstverständlich ist eine gezielte Navigation auch möglich, wenn auf einzelne Komponenten des zweiten Sensors 7 verzichtet wird, oder wenn überhaupt nur die Daten des ersten Sensors 5 herangezogen werden. Insbesondere erlaubt die Verwendung mehrerer unterschiedlicher Ortsbestimmungsverfahren eine möglichst präzise Navigation außerhalb der Regale 15, also z.B. zwischen den Regalen 15 oder eben beim Bewegen im gesamten Geschäftslokal. So kann eine Wi-Fi basierte Ortung Auskunft darüber geben, in welchem Regal 15 sich das Erfassungsgerät 1 gerade befindet und welche Regale 15, die noch nicht erfasst wurden, sich im Umfeld befinden und noch angefahren werden müssen, um auch dort die Erfassung des jeweiligen Zustands zu erledigen. Gleichzeitig kann die NFC-basierte Ortung präzise feststellen, in welcher Regaletage 20a, 20b und in welchem Regalabschnitt 21a bis 21c, insbesondere benachbart zu welchem elektronischen Regaletiketten 27a oder 27b, sich das Erfassungsgerät 1 gerade befindet. Eine bildbasierte und/oder abstandsbasierte Erfassung der Umgebung ist besonders vorteilhaft, um lokal präzise zu manövrieren, wie beispielsweise beim systematischen Abfahren der Vorrichtungszone 16a bis 16d oder beim Bewegen entlang der Übergangselemente.

Abschließend ist in der Figur 8 das Regal 15 aus einer Perspektive betrachtet dargestellt, die der natürlichen Betrachtungsperspektive eines durchschnittlichen Kunden entspricht, also von leicht schräg oberhalb Einsicht nehmend in die Regaletagen 20a und 20b. Deutlich zu sehen ist hier, dass das Erfassungsgerät 1 sowie die meisten Übergangselemente 24a-24e aus dieser Perspektive nicht ersichtlich sind. Zudem bliebt der Blick auf die präsentierten Produkte 26a bis 26d auch bei Anwesenheit des Erfassungsgeräts 1 frei und vor allem durch das Erfassungsgerät 1 ungehindert, da sich das Erfassungsgerät 1 ja bestimmungsgemäß vorwiegend an der Unterseite der Regalböden oder entlang der Rückwand, ggf. auch entlang der Seitenwand, einer Regaletage bewegt. Kunden können so ungestört Einkaufen und die präsentierten Produkte 26a bis 26d begutachten, auch wenn das Erfassungsgerät 1 gerade durch das Regal 1 (oder durch die Regale) manövriert und Erfassungen durchführt.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Erfassungsgerät (1), das aufweist:
- zumindest einen ersten Sensor (5), der zum Erfassen eines Zustands einer Produktpräsentationsvorrichtung (15) vorgesehen ist,
- eine Bewegungsvorrichtung (2), die zum selbstfahrenden Bewegen des Erfassungsgeräts (1) innerhalb der Produktpräsentationsvorrichtung (15) ausgebildet ist, und
- eine Halte- bzw. Haftvorrichtung (10),
**dadurch gekennzeichnet, dass** die Halte- bzw. Haftvorrichtung (10) innerhalb der Produktpräsentationsvorrichtung (15) zum selbstständigen Halten bzw. Haften des Erfassungsgeräts (1) am jeweiligen Ort der Bewegung an der Produktpräsentationsvorrichtung (15) ausgebildet ist, wobei die Halte-bzw. Haftvorrichtung (10) durch eine Magnet-Halte- bzw. -Haftvorrichtung realisiert ist.

2. Erfassungsgerät (1) nach Anspruch 1, wobei die Bewegungsvorrichtung (2) zumindest ein Element der nachfolgend angeführten aufweist, nämlich:
- Rad (4a-4d),
- Rolle,
- Kette,
- Riemen,
- Kugel.

3. Erfassungsgerät (1) nach Anspruch 2, wobei die Bewegungsvorrichtung (2) vier Räder (4a-4d) aufweist, und wobei die Magnet-Halte- bzw. -Haftvorrichtung (10) einen Permanentmagneten aufweist, der in einer zentralen Position des Erfassungsgeräts (1) platziert ist, insbesondere äquidistant beabstandet zu den vier Rädern (4a-4d).

4. Erfassungsgerät (1) nach einem der vorangehenden Ansprüche, wobei die Bewegungsvorrichtung (2) zumindest einen Elektromotor (31a), bevorzugt jedoch zwei Elektromotoren (31a, 31b), aufweist.

5. Erfassungsgerät (1) nach einem der vorangehenden Ansprüche, wobei die Bewegungsvorrichtung (2) zumindest einen zweiten Sensor (7) aufweist, der zur Erfassung der Umgebung des Erfassungsgeräts (1) oder der Position des Erfassungsgeräts (1) für die Zwecke der Bewegung des Erfassungsgeräts (1) vorgesehen ist.

6. Erfassungsgerät (1) nach einem der vorangehenden Ansprüche, das ein erstes Funkmodul (7f) aufweist, das zum funkbasierten Kommunizieren von Daten (D) ausgebildet ist, wobei die Daten (D) den zumindest ersten Sensor (5) oder die Bewegungsvorrichtung (2) betreffen.

7. Erfassungsgerät (1) nach einem der vorangehenden Ansprüche, das eine Steuereinheit (30) aufweist, die dazu ausgebildet ist, die Bewegungsvorrichtung (2) derart anzusteuern, dass das Erfassungsgerät (1) autonom innerhalb der Produktpräsentationsvorrichtung (15) manövrierbar ist.

8. Erfassungsgerät (1) nach Anspruch 7, wobei zumindest der mindestens eine erste Sensor (5) zur Generierung von Erfassungsdaten (D) ausgebildet ist, wobei die Erfassungsdaten (D) den erfassten Zustand der Produktpräsentationsvorrichtung (15) repräsentieren, und wobei die Steuereinheit (30) dazu ausgebildet ist, die Erfassungsdaten (D) vorzuverarbeiten.

9. Erfassungsgerät (1) nach einem der vorangehenden Ansprüche, das eine erste Erkennungsstufe aufweist, die dazu ausgebildet ist, einen Verlust des selbständigen Haltens bzw. Haftens des Erfassungsgeräts (1) an der Produktpräsentationsvorrichtung (15) zu erkennen.

10. Erfassungsgerät (1) nach einem der vorangehenden Ansprüche, das einen elektrischen Energiespeicher (29) aufweist und das dazu ausgebildet ist, bei Unterschreitung eines vordefinierten Ladezustands seines elektrischen Energiespeichers (29) mit Hilfe seiner Bewegungsvorrichtung (2) eine Energieversorgungszone (19) innerhalb der Produktpräsentationsvorrichtung (15) anzufahren.

11. Produktpräsentationsvorrichtung (15), insbesondere Regal oder Tisch, die aufweist:
- zumindest ein Erfassungsgerät (1) gemäß einem der vorangehenden Ansprüche 1-10,
- zumindest eine Vorrichtungszone (16a - 16h), die zur selbstfahrenden Bewegung des Erfassungsgeräts (1) vorgesehen ist, wobei die Vorrichtungszone (16a - 16h) hinsichtlich ihrer Oberflächenbeschaffenheit und/oder ihrer Materialbeschaffenheit derart ausgebildet ist, dass das Erfassungsgerät (1) mit Hilfe seiner Halte- bzw. Haftvorrichtung (10) selbständig an ihr hält bzw. haftet.

12. Produktpräsentationsvorrichtung (15) nach Anspruch 11, die zusätzlich zu der mindestens einen Vorrichtungszone (16a - 16h), die zur Bewegung des Erfassungsgeräts (1) vorgesehen ist, eine sich von der Vorrichtungszone (16a - 16h) unterscheidende Produktpräsentationszone (25a - 25b) zum Präsentieren von Produkten (26a - 26d) aufweist.

13. Produktpräsentationsvorrichtung (15) nach Anspruch 12, wobei die Produktpräsentationsvorrichtung (15) zumindest eine Regaletage (20a, 20b) aufweist und wobei die Vorrichtungszone (16a - 16h) zumindest teilweise aus einer zur Produktpräsentationszone (25a - 25b) hin gewandten Seite einer Rückwand der Regaletage (20a, 20b) und/oder einer Decke der Regaletage (20a, 20b) gebildet ist.

14. Produktpräsentationsvorrichtung (15) nach einem der Ansprüche 11-13, wobei zumindest zwei voneinander unterschiedlich orientierte Vorrichtungszonen (16a - 16h) vorgesehen sind, die mit einem Übergangselement miteinander verbunden sind, wobei das Übergangselement derart ausgebildet ist, dass mit Hilfe der Bewegungsvorrichtung (2) des Erfassungsgerätes (1) ein Übersetzen von der einen Vorrichtungszone (16a - 16h) zur anderen Vorrichtungszone (16a - 16h) ermöglicht ist.

15. Produktpräsentationsvorrichtung (15) nach einem der Ansprüche 11-14, das eine Energieversorgungszone (19) aufweist, wobei die Produktpräsentationsvorrichtung (15) derart ausgebildet ist, dass die Energieversorgungszone (19) von dem Erfassungsgerät (1) mit Hilfe seiner Bewegungsvorrichtung (2) anfahrbar ist, vorzugsweise wobei die Energieversorgungszone (19) eine Ladestation (18) aufweist, mit deren Hilfe, bevorzugt mittels kontaktloser Energieübertragung, das Erfassungsgerät (1) mit elektrischer Energie versorgbar ist.

## Claims

1. A detection device (1) comprising:
- at least one first sensor (5), which is provided for detecting a condition of a product presentation device (15),
- a movement device (2), which is configured for self-propelled movement of the detection device (1) within the product presentation device (15), and
- a holding or adhesive device (10),
**characterized in that** the holding or adhesive device (10), which is configured within the product presentation device (15) for autonomously holding or adhering the detection device (1) to the product presentation device (15) at the respective location of movement, wherein the holding or adhesive device (10) is realized by means of a magnetic holding or adhesive device.

2. Detection device (1) according to claim 1, wherein the movement device (2) comprises at least one of the elements listed below, namely:
- wheel (4a-4d),
- roller,
- chain,
- belt,
- ball.

3. Detection device (1) according to claim 2, wherein the movement device (2) comprises four wheels (4a-4d), and wherein the magnetic holding or adhesive device (10) comprises a permanent magnet that is placed at a central position of the detection device (1), in particular equidistant from the four wheels (4a-4d).

4. Detection device (1) according to one of the preceding claims, wherein the movement device (2) comprises at least one electric motor (31a), but preferably two electric motors (31a, 31b).

5. Detection device (1) according to one of the preceding claims, wherein the movement device (2) comprises at least one second sensor (7), which is provided for detecting the environment of the detection device (1) or the position of the detection device (1) for the purposes of moving the detection device (1).

6. Detection device (1) according to one of the preceding claims, comprising a first radio module (7f) which is configured for radio-based communication of data (D), wherein the data (D) relates to the at least one first sensor (5) or the movement device (2).

7. Detection device (1) according to one of the preceding claims, comprising a control unit (30) which is configured to control the movement device (2) in such a way that the detection device (1) can be maneuvered autonomously within the product presentation device (15).

8. Detection device (1) according to claim 7, wherein at least the at least one first sensor (5) is configured to generate detection data (D), wherein the detection data (D) represents the detected condition of the product presentation device (15), and wherein the control unit (30) is configured to preprocess the detection data (D).

9. Detection device (1) according to one of the preceding claims, comprising a first detection stage which is configured to detect a loss of the autonomous holding or adhesion of the detection device (1) to the product presentation device (15).

10. Detection device (1) according to one of the preceding claims, which comprises an electrical energy storage device (29) and which is configured to approach an energy supply zone (19) within the product presentation device (15) by means of its movement device (2) when the charge status of its electrical energy storage device (29) falls below a predefined level.

11. A product presentation device (15), in particular a shelf or table, comprising:
- at least one detection device (1) according to one of the preceding claims 1-10,
- at least one device zone (16a-16h), which is provided for self-propelled movement of the detection device (1), wherein the device zone (16a-16h) is configured, in terms of its surface properties and/or material properties, in such a way that the detection device (1) autonomously holds or adheres to it by means of its holding or adhesive device (10).

12. Product presentation device (15) according to claim 11, which, in addition to the at least one device zone (16a-16h) provided for movement of the detection device (1), comprises a product presentation zone (25a-25b) for presenting products (26a-26d) which differs from the device zone (16a-16h).

13. Product presentation device (15) according to claim 12, wherein the product presentation device (15) comprises at least one shelf level (20a, 20b), and wherein the device zone (16a-16h) is at least partially formed from a side of a rear wall of the shelf level (20a, 20b) facing toward the product presentation zone (25a-25b) and/or a ceiling of the shelf level (20a, 20b).

14. Product presentation device (15) according to one of claims 11-13, wherein at least two differently oriented device zones (16a-16h) are provided, which are connected to one another by a transition element, wherein the transition element is configured in such a way that, by means of the movement device (2) of the detection device (1), a transfer from one device zone (16a-16h) to the other device zone (16a-16h) is enabled.

15. Product presentation device (15) according to one of claims 11-14, comprising a power supply zone (19), wherein the product presentation device (15) is configured in such a way that the power supply zone (19) can be approached by the detection device (1) by means of its movement device (2), preferably wherein the power supply zone (19) comprises a charging station (18) by means of which, preferably via contactless energy transmission, the detection device (1) can be supplied with electrical energy.

## Revendications

1. Dispositif de détection (1) comprenant :
- au moins un premier capteur (5), configuré pour détecter un état d'un dispositif de présentation de produits (15),
- un dispositif de déplacement (2), configuré pour déplacer de manière autonome le dispositif de détection (1) à l'intérieur du dispositif de présentation de produits (15), et
- un dispositif de maintien ou d'adhérence (10),
**caractérisé en ce que** le dispositif de maintien ou d'adhérence (10) est agencé à l'intérieur du dispositif de présentation de produits (15) pour maintenir ou faire adhérer de manière autonome le dispositif de détection (1) à l'emplacement correspondant à son déplacement sur le dispositif de présentation de produits (15), le dispositif de maintien ou d'adhérence (10) se présentant sous la forme d'un dispositif de maintien ou d'adhérence magnétique.

2. Dispositif de détection (1) selon la revendication 1, dans lequel le dispositif de déplacement (2) comprend au moins un élément choisi parmi :
- une roue (4a-4d),
- un galet,
- une chaîne,
- une courroie,
- une bille.

3. Dispositif de détection (1) selon la revendication 2, dans lequel le dispositif de déplacement (2) comprend quatre roues (4a-4d), et dans lequel le dispositif de maintien magnétique (10) comprend un aimant permanent disposé en position centrale du dispositif de détection (1), en particulier à égale distance des quatre roues (4a-4d).

4. Dispositif de détection (1) selon l'une des revendications précédentes, dans lequel le dispositif de déplacement (2) comprend au moins un moteur électrique (31a), de préférence deux moteurs électriques (31a, 31b).

5. Dispositif de détection (1) selon l'une des revendications précédentes, dans lequel le dispositif de déplacement (2) comprend au moins un deuxième capteur (7), configuré pour détecter l'environnement du dispositif de détection (1) ou la position du dispositif de détection (1) afin de permettre le déplacement du dispositif de détection (1).

6. Dispositif de détection (1) selon l'une des revendications précédentes, qui comprend un premier module radio (7f) configuré pour transmettre et/ou recevoir des données (D) par liaison radio, lesdites données (D) concernant au moins le premier capteur (5) ou le dispositif de déplacement (2).

7. Dispositif de détection (1) selon l'une des revendications précédentes, qui comprend une unité de commande (30) configurée pour commander le dispositif de déplacement (2) de telle sorte que le dispositif de détection (1) puisse se déplacer de manière autonome à l'intérieur du dispositif de présentation de produits (15).

8. Dispositif de détection (1) selon la revendication 7, dans lequel l'au moins un premier capteur (5) est configuré pour générer des données de détection (D), les données de détection (D) étant représentatives de l'état détecté du dispositif de présentation de produits (15), et l'unité de commande (30) étant configurée pour prétraiter les données de détection (D).

9. Dispositif de détection (1) selon l'une des revendications précédentes, qui comprend une première unité de détection configurée pour détecter une perte du maintien ou de l'adhérence autonome du dispositif de détection (1) sur le dispositif de présentation de produits (15).

10. Dispositif de détection (1) selon l'une des revendications précédentes, qui comprend un accumulateur d'énergie électrique (29) et qui est configuré pour se déplacer, lorsque l'état de charge de son accumulateur d'énergie électrique (29) passe en dessous d'un seuil prédéfini, à l'aide de son dispositif de déplacement (2), vers une zone d'alimentation en énergie (19) située à l'intérieur du dispositif de présentation de produits (15).

11. Dispositif de présentation de produits (15), en particulier un rayon ou une table, qui comprend :
- au moins un dispositif de détection (1) selon l'une des revendications 1 à 10 précédentes,
- au moins une zone de dispositif (16a - 16h), configurée pour permettre le déplacement autonome du dispositif de détection (1), ladite zone de dispositif (16a - 16h) étant configurée, en ce qui concerne la nature de sa surface et/ou la nature de son matériau, de telle sorte que le dispositif de détection (1) puisse être maintenu ou adhérer de manière autonome à l'aide de son dispositif de maintien ou d'adhérence (10).

12. Dispositif de présentation de produits (15) selon la revendication 11, comprenant, en plus de l'au moins une zone de dispositif (16a - 16h), prévue pour le déplacement du dispositif de détection (1), une zone de présentation de produits (25a - 25b), distincte de la zone de dispositif (16a - 16h) pour la présentation de produits (26a - 26d).

13. Dispositif de présentation de produits (15) selon la revendication 12, dans lequel le dispositif de présentation de produits (15) comporte au moins un niveau de rayon (20a, 20b) et dans lequel la zone de dispositif (16a - 16h) est configurée au moins en partie du côté de la paroi arrière du rayon (20a, 20b) faisant face à la zone de présentation des produits (25a - 25b) et/ou le plafond du niveau de rayon (20a, 20b).

14. Dispositif de présentation de produits (15) selon l'une des revendications 11 à 13, dans lequel au moins deux zones de dispositif (16a - 16h), orientées différemment l'une par rapport à l'autre, sont fournies, lesquelles sont reliées entre elles par un élément de transition, l'élément de transition étant réalisé de telle sorte qu'à l'aide du dispositif de déplacement (2) du dispositif de détection (1), un passage d'une zone de dispositif (16a - 16h) à une autre zone de dispositif (16a - 16h) soit rendu possible.

15. Dispositif de présentation de produits (15) selon l'une des revendications 11 à 14, comprenant une zone d'alimentation en énergie (19), le dispositif de présentation de produits (15) étant réalisé de manière que la zone d'alimentation en énergie (19) soit accessible au dispositif de détection (1) à l'aide de son dispositif de déplacement (2), la zone d'alimentation en énergie (19) comprenant de préférence une station de recharge (18) au moyen de laquelle, de préférence par transmission d'énergie sans contact, le dispositif de détection (1) peut être alimenté en énergie électrique.
